# EUROPÄISCHE PATENTSCHRIFT

(11) **EP 2 833 367 B1**
(45) Veröffentlichungstag und Bekanntmachung des Hinweises auf die Patenterteilung: **30.10.2019**
(21) Anmeldenummer: 14179429.7
(22) Anmeldetag: 01.08.2014
(51) Int. Cl.: G21D 1/00, G21F 7/00, G21F 9/00, G21F 9/30, E04B 1/00, B07B 11/02, B07B 13/14, E04H 5/02, G21F 3/00

(54) **Anlage und Verfahren zur Bearbeitung von Reststoffen**
Installation and method for processing residual materials
Installation et procédé destinés au traitement de résidus

(30) Priorität: 02.08.2013 DE 102013215250
(43) Veröffentlichungstag der Anmeldung: 04.02.2015
(73) Patentinhaber: Bilfinger Noell GmbH, 97080 Würzburg (DE); EnBW Energie Baden-Württemberg AG, 76131 Karlsruhe (DE)
(72) Erfinder: Edler, Gerd, 97332 Volkach (DE); Hepper, Dr. Ronald, 97074 Würzburg (DE); Starke, Holger, 97261 Güntersleben (DE); Bolles, Frank, 87527 Sonthofen (DE); Pingel, Sönke, 72144 Dusslingen (DE)
(74) Vertreter: Cohausz & Florack

(56) Entgegenhaltungen:
- WO-A1-89/12305
- DE-A1- 2 638 174
- DE-U1- 29 622 583
- JP-A- H08 211 194
- JP-A- 2013 096 959
- US-A- 5 037 159
- MIN B Y ET AL: "Separation of clean aggregates from contaminated concrete waste by thermal and mechanical treatment", ANNALS OF NUCLEAR ENERGY, PERGAMON PRESS, OXFORD, GB, Bd. 37, Nr. 1, 1. Januar 2010 (2010-01-01) , Seiten 16-21, XP026782586, ISSN: 0306-4549, DOI: 10.1016/J.ANUCENE.2009.10.010 [gefunden am 2009-11-04]
- D. Rittscher ET AL: "Kernkraftwerke Greifswald und Rheinsberg: Stillegung, Abbau und Aufbau", Internationale Zeitschrift für Kernenergie, vol. 47, no. 4, 1 April 2002 (2002-04-01), pages 235-243, XP055402261, ISSN: 1431-1525
- Für Strahlenschutz Bundesamt: "Genehmigung ZLN Zwischenlager Nord", , 5 November 1999 (1999-11-05), pages 1-115, XP055402253, Retrieved from the Internet: URL:http://www.bfe.bund.de/DE/ne/zwischenl ager/zentral/nord/nord_node.html [retrieved on 2017-08-30]
- Innenministerium Mecklenburg-Vorpommern: "Genehmigung nach 3 StrlSchV (a.F.) zur Konditionierung und Zwischenlagerung von radioaktiven Reststoffen/Abfällen im Zwischenlager Nord (ZLN), Rubenow vom 20.02.1998" In: "Genehmigung nach 3 StrlSchV (a.F.) zur Konditionierung und Zwischenlagerung von radioaktiven Reststoffen/Abfällen im Zwischenlager Nord (ZLN), Rubenow vom 20.02.1998", 11 December 2007 (2007-12-11), XP055402342,
- Enrgiewerke Nord: "Grundriss Zwischenlager Nord" In: "Grundriss Zwischenlager Nord", 15 May 1998 (1998-05-15), Lubmin, XP055419390, pages 1-1,
- Michael Masciale: "Manual on Maintenance Coatings for Nuclear Plants" In: "Manual on Maintenance Coatings for Nuclear Plants", 1 December 1990 (1990-12-01), American Society for Testing and Material, Baltimore, XP055419460, pages 18-22,
- Peter Jacobs ET AL: "Die zweite Chance-Abbau und Aufbruch am KKW-Standort Lubmin" In: "Die zweite Chance-Abbau und Aufbruch am KKW-Standort Lubmin", 31 December 2004 (2004-12-31), W&W-Verlagsgesellschaft mbH, Berlin, XP055419544, ISBN: 978-3-9804154-6-0 pages 47-73,
- S. Thierfeld: "Stillegung und Rückbau kerntechnischer Anlagen" In: "Stillegung und Rückbau kerntechnischer Anlagen", 30 September 2012 (2012-09-30), Brenk Systemplanung, Aachen, XP055419577, pages 74-145,
- Anonymous: "Genehmigung zum Umgang mit sonstigen radioaktiven Stoffen in der Zentralen Aktiven Werkstatt (ZAW) des Kernkraftwerkes Lubmin / Greifswald", European Patent Register, 26 June 1997 (1997-06-26), pages 1-95, XP055498002, Schwerin, DE Retrieved from the Internet: URL:https://register.epo.org/application?d ocumentId=E0SC2UFD7365DSU&number=EP1417942 9&lng=en&npl=true [retrieved on 2018-08-07]

## Beschreibung

Die Erfindung betrifft eine Anlage zur Bearbeitung von aktivierten, kontaminierten und/oder nicht kontaminierten Reststoffen entsprechend den Merkmalen des ersten Patentanspruches und ein Verfahren zur Bearbeitung der genannten Reststoffe.

Die Anlage und das Verfahren sind überall dort einsetzbar, wo metallische und mineralische Reststoffe sowie brennbare und nicht brennbare Abfälle aus dem Rückbau einer kerntechnischen Anlage so bearbeitet werden sollen, dass bei flexibler modularer Bauweise der einzelnen Bearbeitungsstationen und bei geringer Strahlenbelastung und geringem Transportaufwand kontaminierte Reststoffe nach einer Trennung und einer Dekontamination einerseits einer Wiederverwendung und andererseits einer Deponie oder einem Endlager zugeführt werden sollen.

Beim Rückbau eines Kernkraftwerkes fallen metallische und mineralische Reststoffe sowie brennbare und nicht brennbare Abfälle an. Von der gesamt vorhandenen Masse eines Kernkraftwerks (ohne Brennstoffe) müssen ca. 10 % behandelt werden, der Rest kann der freien Verwertung zugeführt werden. Die zu behandelnden Anlagenteile, Abfälle und Sekundärabfälle können je nach Kraftwerk zwischen 20.000 t und 50.000 t liegen. Der größte Teil dieser Materialien, ca. 70 %, werden entweder über die direkte Entscheidungsmessung oder über das Einschmelzen der uneingeschränkten Freigabe zugeführt. Der Rest, ca. 30 %, ist zum Teil deponiefähig (Baumaterialien und -stoffe), jedoch zum anderen Teil als mittelbis schwachradioaktiver Abfall einem Endlager zuzuführen.

Zusätzlich können Großkomponenten wie z. B. Dampferzeuger verarbeitet werden. Zur Erreichung der angestrebten Entsorgungsziele müssen manche Komponenten mehrfach behandelt werden, wobei von einer Rückläuferquote von ca. 20 % ausgegangen wird. Generell dürfen nur Materialien angeliefert werden, deren Entsorgungsweg geklärt ist.

Es sind unterschiedliche Anlagen und Verfahren zur Bearbeitung kontaminierter Reststoffe bekannt.

Sofern die Oberflächen von kontaminierten Bauteilen mit einer radioaktiven Verschmutzung versehen sind, beschreibt EP 0 638 516 A1 ein Verfahren zum Entfernen von Blei und Cadmium aus Phosphorsäure. Dieses Verfahren ist dann sinnvoll, wenn eine chemische oder elektrochemische Dekontaminierung erfolgt und die verbrauchte Phosphorsäure aus der Reinigung kontaminierter Teile regeneriert werden muss.

WO 2013/175089 A1 beschreibt ein chemisches Verfahren zur Dekontamination von Stahlteilen mit Phosphorsäurelösung.

US 5,037,159 beschreibt das Entfernen einer kontaminierten Schicht durch Abschlagen der kontaminierten Betonteile.

DE 26 38 174 A1 beschreibt den Rückbau eines Kernreaktors.

Aus der XP 055 402 261, D. Rittscher et al.: "Kernkraftwerke Greifswald und Rheinsberg: Stilllegung, Abbau und Aufbau", internationale Zeitschrift für Kernenergie, Bd. 47, Nr. 4 (2002-04-01), Seiten 235 bis 243 ist gleichfalls eine Anlage zur Bearbeitung von aktivierten, kontaminierten und/oder nicht kontaminierten Reststoffen bekannt, nämlich das Zwischenlager Nord (ZLN). Das ZLN ist jedoch unmittelbar einer kerntechnischen Anlage, nämlich dem ehemaligen Kernkraftwerk Greifswald, zugeordnet.

Unabhängig davon sind unterschiedliche Verfahren zur Bearbeitung von Reststoffen bekannt, die eingesetzt werden, um die Reststoffe zu transportieren, zu sortieren und/oder zu zerkleinern.

Nachteilig an den bekannten Verfahren ist, dass die Reststoffbehandlung nicht entkoppelt vom Rückbau der kerntechnischen Anlagen erfolgt, sondern unmittelbar vor Ort. Damit kann eine Anlage für die Bearbeitung kontaminierter Reststoffe lediglich für den Rückbau einer einzigen Anlage und entsprechend deren Kapazität und der Platzverhältnisse genutzt werden.

Für diese Fälle müssen Planungs- und Koordinierungsaktivitäten für jede einzelne Anlage betrieben werden. Durch die vorhandenen Räumlichkeiten treten Einschränkungen im Hinblick auf die Bearbeitungsfläche auf. Optimale Transportwege zu den Bearbeitungsstationen sind in der Regel nicht vorhanden. Ein modularer Aufbau ist weder erforderlich noch möglich, da die geplante und realisierte Anlage nur für das konkrete zurückzubauende Kraftwerk geplant ist. Synergien im Hinblick auf die Austauschbarkeit von Personal zwischen Standorten sind in der Regel nicht möglich.
Es ist daher Aufgabe der Erfindung, eine Anlage und ein Verfahren zur Bearbeitung kontaminierter Reststoffe zu entwickeln, die an einem dafür vorgesehenen Standort dauerhaft installiert wird und somit vom Rückbau entkoppelt ist, wobei die einzelnen Bearbeitungsstationen im Baukastenprinzip verkleiner- oder vergrößerbar sind, keine gegenseitige Beeinflussung der Transportwege vorhanden ist, wobei hochwertige Aggregate und eingearbeitetes Personal dafür sorgen, dass ein Minimum radioaktiver Abfälle entsteht, so dass ein hoher Anteil von Reststoffen einer Wiederverwertung zugeführt werden kann.
Diese Aufgabe wird durch eine Anlage nach den Merkmalen des ersten Patentanspruches und ein Verfahren nach den Merkmalen des Anspruches 8 gelöst.
Unteransprüche geben vorteilhafte Ausgestaltungen der Erfindung wieder.

Die erfindungsgemäße Lösung sieht eine Anlage zur Bearbeitung von kontaminierten Reststoffen vor, in der diese Reststoffe derart bearbeitet werden, dass möglichst ein hoher Anteil der Reststoffe einer Wiederverwertung zugeführt wird.

Die Anlage besteht aus einer Anlagefläche mit einem Gebäude mit einem Ein- und Ausgang für Personal, einer Schleuse für kontaminierte Teile und einem Ausgang für dekontaminiertes Material, wobei auf der Anlagefläche Bearbeitungsstationen angeordnet sind, die durch flexible Wände voneinander getrennt sind. Auf der Anlagefläche befinden sich Transportbehälter, Transportmittel und Lagerräume. Die Bearbeitungsstationen, an denen eine hohe Dosisleistung auftritt, sind in einem Bereich für hohe Dosisleistungen angeordnet, welcher weit entfernt vom Ein- und Ausgang für Personal sowie dem Ausgang für freigebbares Material angeordnet ist.

Weiterhin sind auf der Anlagefläche ein Putz-, ein Serviceraum, ein Büro und Messräume sowie ein Öl- und ein Flüssigkeitsvorratsraum angeordnet.

Vorteilhaft ist es, wenn die Wände des Gebäudes mit einer leicht dekontaminierbaren Beschichtung versehen sind. Im Gebäude befindet sich die Anlagefläche, auf der feste und flexible Wände angeordnet sind. Die festen Wände stellen Mauern aus Ziegeln, Beton oder anderen Bauteilen dar. Die festen Wände sind um die Bearbeitungsbereiche oder Stationen angeordnet, deren Fläche sich nicht ändert. Die flexiblen Wände können Plastikfolien, Zeltbahnen, Zelte, Stellwände oder andere verstellbare Wände darstellen.
Durch die flexiblen Wände können die Bearbeitungsstationen entsprechend dem erforderlichen Durchsatz vergrößert, verkleinert oder ggf. umgestellt werden.
Die Bearbeitungsstationen werden den unterschiedlichen Anforderungen an die Bearbeitung im Hinblick auf die benötigte Fläche und das durchzuführende Verfahren der kontaminierten Reststoffe gerecht.

Dabei kann es sich um einen Zerlegungsbereich für Großkomponenten, eine Beton- oder Betonflächenbearbeitung, eine Strahlmittelaufbereitung, eine Kabelbearbeitung oder -aufbereitung, eine thermische Zerlegung, eine Sortierung für radioaktiven und nichtradioaktiven Abfall, eine Fassabfüll- und Messanlage, eine Sortierungsanlage, eine Waschanlage, eine Trocknung, eine Hochdruckpresse, eine Schmelzcontaineroptimierung, eine manuelle Zerlegung, eine nass-chemische Dekontamination, eine Schleuderradanlage, eine Strahlanlage, ein Ultraschallbad, eine Boxenwaschanlage, eine Dünnblechverarbeitung, eine Asbestkonditionierung oder Gefahrenanlage, eine Containerbefüllung oder eine Verdampfungsanlage handeln.

Die verwendeten Transportbehälter können Fässer, kleine oder große Behälter, Gitterboxen, Endlagerbehälter, insbesondere Konrad-Container, oder Container darstellen.
Als Transportmittel finden E-Stapler, Hubstapler, Portalkrane, Schwenkkrane, Fördereinrichtungen oder Hängebahnen Anwendung, die in den verschiedenen Bereichen gezielt eingesetzt werden.

Beim Rückbau von Kernkraftwerken fällt eine große Menge kontaminierten Materials an, im Wesentlichen Metall und Beton. Um das Volumen des radioaktiven Abfalls zu reduzieren, muss das abgebaute, kontaminierte Material aufgeteilt oder getrennt werden in freigegebenes Material, das mit Dekontaminationsmethoden behandelt wird, und radioaktiven Abfall zur Langzeitlagerung. Staatliche Überwachungsstellen legen den Grenzwert fest, bis zu welchem eine Freimessung von kontaminiertem Material erlaubt ist. Der Grenzwert beispielsweise, bis zu dem eine Freimessung von Material aus einem rückgebauten Reaktor möglich ist, kann 0,1 Becquerel/Gramm (Bq/g) betragen.
Üblicherweise liegt eine Kontamination mit Uranoxid, Plutoniumoxid, Strontium-90, Cäsium-137 und Kobalt-60 vor. Der Radioisotop-Gehalt des Abfalls wird über radiochemische Nuklid-Vektoren bestimmt, die von Proben des kontaminierten Materials genommen werden. Die Nuklid-Vektoren bestimmen sich aus dem Verhältnis der zu messenden radioaktiven Radionuklide wie z.B. Kobalt-60 und Cäsium-137 zueinander. Es wird dann davon ausgegangen, dass die Radioisotope jeweils die gleiche Streuung innerhalb der einzelnen Bereiche eines jeden abgebauten Kernkraftwerkes haben. Ein stillgelegtes Kernkraftwerk kann beispielsweise in 10 Bereiche mit jeweils eigenen Nuklidvektoren eingeteilt werden. Dann wird ein Radioisotop gemessen und es wird angenommen, dass die restlichen Radioisotope der Abfälle so verteilt sind, wie im Nuklidvektor des entsprechenden Bereiches des Kernkraftwerks bestimmt. In der aktuellen Darstellung ist dies Kobalt-60. Damit sind insbesondere Großkomponenten, metallische Reststoffe, Betonplatten, Betonschutt und weitere Reststoffe zu entsorgen.

Vorteilhaft ist es, im Zerlegebereich für Großkomponenten mindestens eine Bandsäge, mindestens eine Hydraulikschere oder mindestens eine Bügelsäge anzuordnen.
Weiterhin ist es vorteilhaft, in der Betonbearbeitung mindestens einen Kernbohrer, mindestens eine Betonfräse, mindestens eine Kreissäge für große oder kleine Betonriegel einzusetzen, mindestens eine Seilsäge oder mindestens einen Betonshredder anzuordnen.

Die thermische Zerlegung findet in Caissons statt. Ein Caisson ist eine aus mobilen Wänden aufgestellte Einhausung mit einer Dachabdeckung. Der Zugang erfolgt für das Personal über Schleusen. Materialtransporte erfolgen durch Tür-, Tor- oder Dachöffnungen. Eine Schleusenfunktion muss hier nicht zwingend erfüllt werden. Materialtransporte werden mit Krananlagen, Hub- oder Gabelstaplern ausgeführt. In diesen können ein Schweißtisch sowie ein Stellplatz für Gitterboxen angeordnet sein. In der Anlage sind vorteilhafterweise für die thermische Zerlegung drei Caissons angeordnet.

In der Trockenstrahlanlage können eine Muldenstrahlanlage, eine Strahlbox und/oder eine Schleuderradanlage und eine Strahlmittelaufbereitung angeordnet sein.
Kabel können in einer Kabelbearbeitung oder -aufbereitung mittels Kabelshredder, Kunststoffshredder und Kabelschäler bearbeitet oder aufbereitet werden.
Weiterhin kann eine Boxenwaschanlage angeordnet sein.

In der manuellen Zerlegung kann eine Dünnblechverarbeitung angeordnet sein.
Weiterhin ist es vorteilhaft, in der Abfallsortierung einen Container für radioaktives, brennbares Material, eine Sortierung für nicht radioaktives, brennbares Material und dessen Lagerung, eine Abfallsortierung für radioaktiven Abfall anzuordnen und eine Bindemaschine sowie eine Ballenpresse und eine Infasspresse anzuordnen.
Weiterhin ist es vorteilhaft, in einer Trocknungsanlage einen Trockenofen, eine Cobalt-Coincidence(C.C.)-Messanlage, eine Steuerung für die Bediengeräte und eine Fassmessung anzuordnen.

Weiterhin ist es vorteilhaft, in der Fassabfüllanlage eine Fassaufgabe, eine Fassabfüllung, eine Fassausgabe, eine Hochdruckpresse, einen Hydraulik- und Steuercontainer für die Steuerung der Fassabfüllanlage und eine Bördelmaschine anzuordnen.

Der Messraum ist mit Instrumenten zum Messen und Registrieren von Dosisleistungen wie zum Kennzeichnen von gemessenen Behältern zu versehen.
Weiterhin ist es vorteilhaft, die Nassdekontamination mit heißem und kaltem Hochdruckwasser zu versehen sowie einem Schrägbandfilter, einem Pumpenfilter für einen ersten Zwischenbehälter und einem Pumpenfilter für einen zweiten Zwischenbehälter in diesem Bereich anzuordnen.
In der Asbestbehandlung oder der Asbestkonditionierung kann eine Infasspresse angeordnet sein.

Die Anlage zur Bearbeitung von kontaminierten Reststoffen hat den Vorteil, dass die Reststoffbehandlung entkoppelt vom Rückbau und unabhängig von einem konkreten Kraftwerk erfolgt. Eine gegenseitige Beeinflussung durch Transportwege ist in dieser Anlage nicht möglich.

Das Baukastenprinzip ermöglicht ein einfaches Zuschneiden der Ausrüstung auf den Bedarf des Rückbaus, wobei die Anlage während des Rückbaus an die erforderliche Bearbeitungskapazität angepasst werden kann.

Da die Anlage so konzipiert ist, dass die Bearbeitungsstationen auf der Anlagefläche entsprechend der Dosisleistung angeordnet sind, bleibt die Belastung für Umwelt und Menschen gering.

Die Anlage erlaubt es, einen größtmöglichen Anteil kontaminierter Reststoffe einer Wiederverwertung zuzuführen.

Die Anlage erlaubt es weiterhin, unnötige Radioaktivtransporte insbesondere auf dem Staatsgebiet zu vermeiden.
Durch spezielle Verfahren in der Anlage kann eine hoch effektive Dekontamination und eine optimale Zerlegung durchgeführt werden, wodurch eine maximale Ausnutzung der Endlagergebinde durch Kombination von Abfallarten entsteht.
Das erfindungsgemäße Verfahren zur Bearbeitung aktivierter, kontaminierter und/oder nicht kontaminierter Reststoffe aus dem Rückbau kerntechnischer Anlagen sieht vor, die Reststoffe weitestgehend einer Wiederverwertung zuzuführen, wobei diese in einem oder mehreren Bearbeitungsstationen bearbeitet werden, wonach eine Entscheidungsmessung stattfindet und die dekontaminierten Reststoffe einer Wiederverwertung, die kontaminierten Reststoffe einer Deponie und die radioaktiven Abfälle einem Endlager zugeführt werden.

Die Bearbeitung metallischer Reststoffe, die auch Großkomponenten wie Dampferzeuger darstellen können, sieht zunächst eine manuelle, thermische oder/und mechanische Zerlegung, danach eine Dekontamination durch Hochdruckreinigung oder chemische Oberflächenbearbeitung oder einem Trockenstrahlverfahren vor, wonach eine Vor- oder Entscheidungsmessung stattfindet. Die nass-chemische Oberflächenbehandlung kann nach einem Verfahren stattfinden, wie dieses in WO 2012/175098 A1 beschreiben ist. Nach der Vor- und Entscheidungsmessung ist ersichtlich, ob die Dekontamination durch die genannten Verfahren erfolgreich war und der metallische Reststoff einer Wiederverwertung zugeführt werden kann oder ob eine Wiederholung der Dekontaminationsschritte erfolgen muss. Nach der Entscheidungsmessung kann der metallische Reststoff die Anlage verlassen oder muss im Ausnahmefall wiederholt behandelt werden.

Mineralische Reststoffe wie Betonteile und -strukturen werden zunächst zerlegt. Diese Zerlegung kann mittels Seil- oder Kreissäge oder pneumatischen oder hydraulischen Hämmern oder anderen geeigneten Geräten erfolgen. Teile, wie z. B. Versatzteile oder andere im Beton vergossene Stahlteile, die die Dekontamination verhindern, werden entfernt. Die kontaminierte Oberfläche von Betonplatten wird abgefräst. Die auf diese Weise behandelten Betonplatten und -teile werden einer Vor- und Entscheidungsmessung zugeführt, wobei eine Zuordnung zu konventionellem oder radioaktivem Abfall erfolgt und diese Teile danach auf dem vorgesehenen Weg die Anlage verlassen.

Reststoffe wie Betonteile werden durch eine Betonoberflächenbearbeitung mittels einer Betonfräse bearbeitet die die kontaminierten Abfälle in einer notwendigen Tiefe abträgt. Die entstehenden Staubpartikel werden mittels Unterdruck abgesaugt und einem Staubabscheider, beispielsweise einem Zyklon, zugeführt. Der Unterdruck wird durch eine Vakuumpumpe oberhalb des Zyklons erzeugt. Zwischen Zyklon oder Staubabscheider ist mindestens ein Filter zum Abscheiden feiner Staubpartikel angeordnet. Vorteilhaft ist es weiterhin, nach einem ersten Filter einen Polizeifilter anzuordnen. Der Filter nach dem Zyklon wird gereinigt, indem der Filterkuchen nach unten über den Zyklon geleert wird. Der im Filter gesammelte Staub wird mittels Detektor auf seine radioaktiven Bestandteile überwacht und bei entsprechender Grenzwertüberschreitung gereinigt.

Im Staubabscheider werden die staubförmigen Partikel abgeschieden, die den Abscheider nach unten verlassen, wo sie in einem geeigneten Behälter aufgefangen werden. Von den Staubpartikeln, die den Abscheider verlassen, wird kontinuierlich durch ein Aktivitätsmessgerät die Radioaktivität gemessen. In Abhängigkeit von der Strahlenbelastung des Staubes wird dieser als frei messbarer Staub entsorgt oder als kontaminierter Staub einem Endlager zugeführt. Nicht kontaminierter Staub kann einer Nutzung zugeführt werden. Das Trennen von kontaminiertem und nicht kontaminiertem Staub erfolgt nach der Aktivitätsmessung mittels Zweiwegeklappe. Der Transport der Staubteile kann mittels geeigneter Behälter wie Fässer erfolgen.

Die Vorrichtung zur Bearbeitung von Betonteilen und das Verfahren zum Bearbeiten dieser Betonteile sind detailliert in einem Ausführungsbeispiel beschrieben. Vorrichtungen und Verfahren können auch unabhängig von der vorliegenden Gesamtanlage, also separat, genutzt werden.

Die Bearbeitung von mineralischen Reststoffen wie Bauschutt erfolgt in der Weise, dass dieser zunächst vorgemessen wird, wonach eine Einteilung in konventionellen oder radioaktiven Abfall erfolgt. Radioaktiver als auch konventioneller Abfall werden getrennt einer Siebklassierung unterzogen, wobei die Grobfraktion jeweils einer anschließenden Grobzerkleinerung in einem Brecher wie einem Backenbrecher auf eine dafür vorgesehene Korngröße zerkleinert wird. Dabei werden konventionelle Reststoffe in anderen Klassier- und Zerkleinerungsaggregaten als radioaktiver Abfall behandelt werden, das heißt, konventioneller Abfall und radioaktiver Abfall werden jeweils gesondert einer Klassierung und einer Zerkleinerung zugeführt. Die zerkleinerten Reststoffe werden dann erneut einer Entscheidungsmessung zugeführt, wonach konventioneller Abfall verpackt und einer Deponie zugeführt wird und radioaktiver Abfall auf bekannte Weise in Konrad-Container verfüllt oder verpresst und anschließend in diesen die Anlage zu einem Endlager verlassen.

Reststoffe wie Kabel werden zunächst einer Dekontamination durch Wischen oder einem anderem geeignetem Verfahren unterzogen, wonach ein Schälen der Kabel erfolgt und in einem weiteren Verfahrensschritt das Shreddern der Kabel. Ebenfalls geshreddert werden können die abgeschälten Kunststoffteile des Kabels. Vorteilhaft ist es, die Kabel und die abgetrennten Kunststoffteile getrennt zu shreddern. Die geschälten und geshredderten Kabelteile werden nach der Zerkleinerung einer Entscheidungsmessung zugeführt, wonach ein Verpacken und Recyceln von wiederverwendbaren Reststoffen erfolgt oder, sofern kontaminierte Teile vorliegen, ein Verfüllen in einen Abfallbehälter mit anschließendem Transport zu einer Lagerung in bekannter Weise.

Das Bearbeiten von Abfällen erfolgt in der Weise, dass diese in der Anlage zunächst in konventionelle und radioaktive Abfälle sortiert werden, was auf der Grundlage einer Entscheidungsmessung erfolgen kann. Die konventionellen brennbaren Abfälle werden gepresst und einer Vor- und Entscheidungsmessung zugeführt, wonach die unbelasteten Abfälle einer externen konventionellen Verbrennung zugeführt werden. Die radioaktiven Abfälle werden in brennbare und nicht brennbare Abfälle getrennt, wobei die brennbaren radioaktiven Abfälle gepresst und einer Dosisleistungs- und Kontaminationsmessung mit anschließender externer Verbrennung zugeführt werden. Die radioaktiven nicht brennbaren Abfälle werden einer Hochdruckpresse und einer Trocknung zugeführt.

Die radioaktiven verbrannten und gepressten und getrockneten Abfälle werden einer Lagerung, ggf. Fässern oder Containern, und einem Abtransport zugeführt.

Im Folgenden wird die Anlage an zehn Figuren und einem Ausführungsbeispiel näher erläutert. Die Figuren zeigen:
- Figur 1:: Anlage zur Bearbeitung kontaminierter Reststoffe in schematischer Darstellung, wobei die Bearbeitungsstationen auf der Anlagefläche dargestellt sind.
- Figur 2:: Anlage zur Bearbeitung kontaminierter Reststoffen mit dem Verfahrensweg von einem Container angelieferten Metallteilen, die in der Anlage dekontaminiert werden.
- Figur 3:: Anlage zur Bearbeitung kontaminierter Reststoffe in schematischer Darstellung und mit dem Weg von Abfällen, die in der Anlage einer Sortierung zugeführt werden.
- Figur 4:: Anlage zur Bearbeitung kontaminierter Reststoffe in schematischer Darstellung und dem Weg von Großkomponenten, die in der Anlage zerlegt und dekontaminiert werden.
- Figur 5:: Anlage zur Bearbeitung kontaminierter Reststoffe in schematischer Darstellung und dem Weg von Betonteilen durch die Anlage, die in der Anlage bearbeitet werden.
- Figur 6:: Schnitt durch die Seitenansicht eines Kernkraftwerkes
- Figur 7:: Teilschnitt durch eine Betonplatte wie einen Betonfußboden
- Figur 8:: Darstellung der Verfahrensschritte 65-71
- Figur 9:: Darstellung einer Vorrichtung zum Abtrennen radioaktiv kontaminierten Materials und Behandlung desselben
- Figur 10:: Detaillierte Darstellung eines Cobalt-Coincidence-Messgerätes

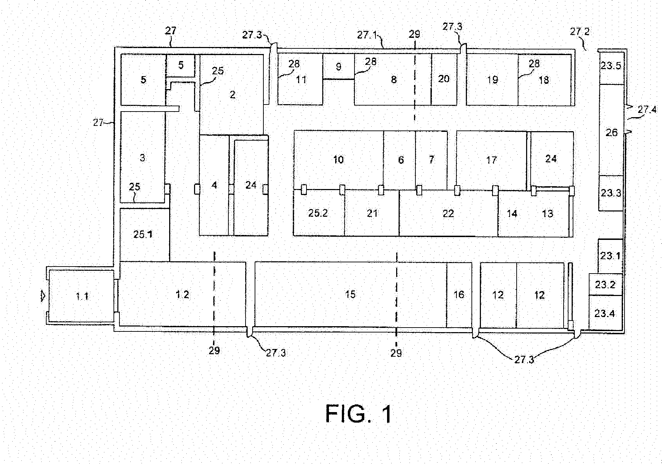

*Figur 1* zeigt die erfindungsgemäße Anlage zur Bearbeitung kontaminierter Reststoffe in schematischer Darstellung, bestehend aus dem Gebäude 27, in dem sich die Anlagefläche befindet, die Schleusen 1.1, 1.2 aufweist, durch die kontaminierte Teile wie ein Dampferzeuger 32 oder kleine kontaminierte Teile einzeln oder in einem 20'-Container in das Gebäude 27 gelangen. Für das Personal sind ein Ein- und Ausgang 27.2 für Personen rechts oben und Notausgänge 27.3 angeordnet. Dekontaminiertes Material kann durch den Ausgang für dekontaminiertes Material 27.4 oben rechts das Gebäude 27 wieder verlassen. Kontaminiertes Material kann das Gebäude 27 durch die Schleusen 1.1, 1.2 wieder verlassen. Auf der Anlagefläche 29 sind unterschiedliche Bearbeitungsstationen angeordnet, die bezeichnet sind. Um die Bearbeitungsstation sind flexible Wände 28 angeordnet. Diese flexiblen Wände können beispielsweise ein Zelt oder eine andere geeignete Vorrichtung darstellen. Auf diese Weise ist es möglich, die Bearbeitungsstation mit einem geringen Aufwand zu vergrößern, zu verkleinern oder innerhalb der Anlagefläche umzustellen. Weiterhin sind auf der Anlagefläche Transportmittel, ein Büro und ein Putz- und Serviceraum 23.1, ein Öl- und Flüssigkeitslager 23.2, eine Werkzeugausgabe 23.4, Stapel- und Ladeflächen 23.3 vorhanden. Auf der Anlagefläche sind Transportbehälter wie ein Fass, Gitterboxen, Endlagerbehälter oder Container aufgestellt.

Als Bearbeitungsstationen auf der Anlagenfläche 29 kann es sich um den Zerlegebereich für Großkomponenten (Großkomponentenbehandlung) 15, eine Betonflächenbearbeitung 22, eine Bandsäge 16, eine thermische Zerlegung 12, einen Betonbrecher 21, eine manuelle Zerlegung 13 mit Dünnblechverarbeitung 14, eine mechanisch-thermische Zerlegung, eine Beladungsoptimierung eine CC-Messung 25.2, eine Nasskontamination mit chemischen Mitteln 10 oder einen Hochdruckwasserstrahl 8, eine Kabelbearbeitung 17, ein Sortierzelt 20 für nichtradioaktive Abfälle, ein Sortierzelt 19 für radioaktive Abfälle, eine Asbestkonditionierung 18, eine Trocknungs-/Fassmessanlage 3, eine Hochdruckpresse 2, ein Ultraschallbad 9, eine Konrad-Container-Verladung 4, handeln.

Entsprechend der in den unterschiedlichen Bereichen vorhandenen Dosisleistungen weist die Anlagefläche auf der rechten Seite einen Bereich mit Bearbeitungsstationen mit geringer Dosisleistung, in der Mitte einen Bereich mit Bearbeitungstationen mit mittlerer Dosisleistung und auf der linken einen Bereich mit Bearbeitungsstationen mit hoher Dosisleistung auf. Das hat den Vorteil, dass stark kontaminierte Teile sich in dem einen Bereich befinden und weniger stark kontaminierte Teile sich in dem anderen Teil befinden. Der Bereich mit hoher Dosisleistung befindet sich gegenüber dem Ein- und Ausgang 27.2 für Personen und dem Ausgang 27.4 für dekontaminiertes Material. Teile mit einer hohen Dosisleistung befinden sich in dem Bereich für hohe Dosisleistung und können die Anlagefläche auch in diesem Bereich verlassen, ohne in die anderen Bereiche zu gelangen.

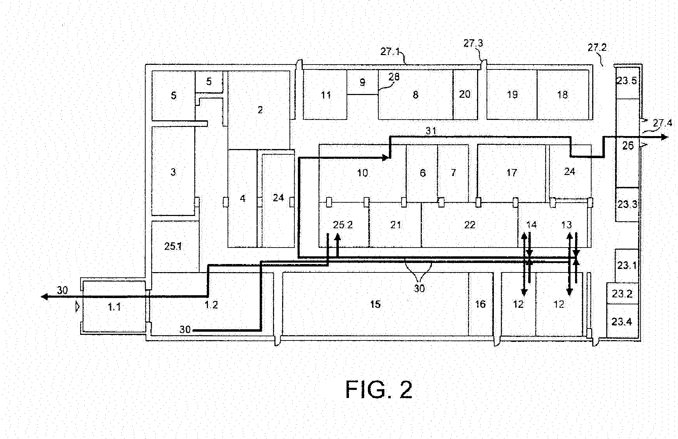

Die *Figur 2* zeigt den Weg von kontaminierten und dekontaminierten Metall- oder Stahlteilen 30, 31 durch die erfindungsgemäße Anlage. Die Anlieferung erfolgt durch die innere und durch die äußere Schleuse 1.1, 1.2 in einem 20'-Container. Diesem werden die Metallteile 30, 31 durch ein geeignetes Transportgerät entnommen und der manuellen Zerlegung 13 der Dünnblechbearbeitung 14 oder der thermischen Zerlegung 12 zugeführt. In diesem Arbeitsbereich können die Metallteile 30, 31 auseinandergeschraubt und mit Transportösen versehen werden. In der nachfolgenden mechanisch-thermischen Zerlegung können die Teile beispielsweise durch Sägen oder Trennschneiden zerlegt werden. Diese Zerlegung kann automatisch erfolgen. Danach werden die Metallteile durch die Anlage zur Dekontamination transportiert. Das kann je nach Größe des Teils mittels E-Stapler, Hubstapler oder Portalkran erfolgen. Die Dekontamination kann auf bekannte Weise mittels Hochdruckreinigung, einem Trockenstahlverfahren, einem Muldenstrahlverfahren, einem Schleuderradverfahren oder einem Strahlboxverfahren erfolgen. Die Dekontamination mittels Phosphorsäure bei einer Einwirkzeit von 5 bis 6 Stunden erfolgt in der Anlage und in Figur 2 in einer Nassdekontamination 10.
Nach der Nassdekontamination 10 werden die behandelten Teile auf einer Pufferfläche 24 gelagert und einem Vormessbereich 26 einer Vor- und Entscheidungsmessung zugeführt, worauf einwandfrei dekontaminierte metallische Stahlteile 31 die Anlage verlassen. Kontaminierte Stahlteile 30 werden nach der Kontaminationsmessung 25.2 über die Schleusen 1.1, 1.2 ggf. mittels Container aus dem Gebäude 27 transportiert oder nochmals einer Dekontamination unterzogen.

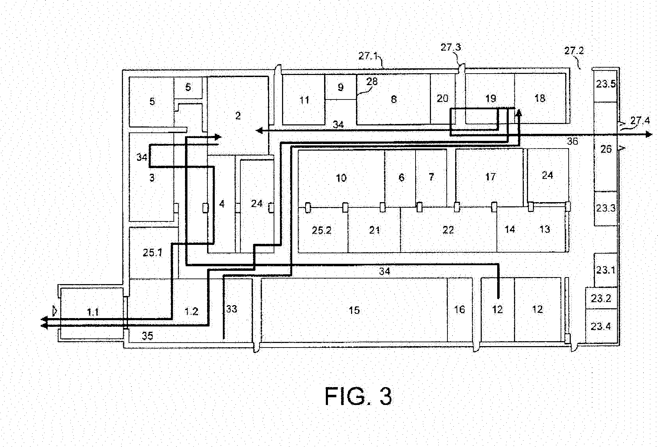

Die *Figur* 3 zeigt die Anlage zur Bearbeitung von Reststoffen und den Weg von Abfällen durch diese Anlage. Die Lieferung der Abfälle wie kontaminierte Reststoffe 33 erfolgt durch die Schleusen 1.1, 1.2 in die Anlage, im vorliegenden Fall durch einen 20'-Container. Dieser wird zum Sortierzelt für radioaktive Abfälle 19 transportiert und in konventionelle und radioaktive Abfälle sortiert. Unbelastete Abfälle werden einer konventionellen Verbrennung zugeführt. Die radioaktiven Abfälle werden in brennbare und nicht brennbare Abfälle getrennt, wobei die brennbaren radioaktiven Abfälle gepresst und anschließend einer Verbrennung zugeführt werden und die radioaktiven nicht brennbaren Abfälle einer Hochdruckpresse 2 und einer Trocknung 3, wonach die radioaktiven Abfälle in Endlager (Konrad-)Container 4 gefüllt und über die Schleusen 1.1, 1.2 einem Endlager zugeführt werden.

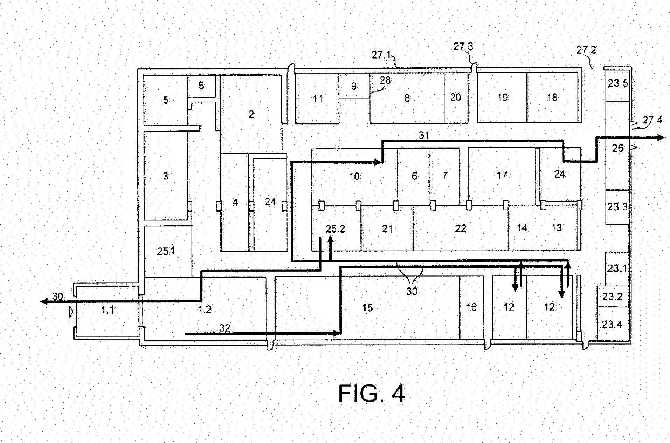

Die *Figur 4* zeigt die Anlage zur Bearbeitung von Reststoffen und den Weg eines Dampferzeugers 32 durch diese Anlage. Der Dampferzeuger 32 und seine Teile werden zunächst in der Großkomponentenzerlegung 15 zerlegt. Dazu sind Bandsägen 16 angeordnet, die den Dampferzeuger 32 in gut transportierbare Teile zerlegen. Eine weitere Zerlegung erfolgt als eine thermische Zerlegung 12, in der der Dampferzeuger 32 oder einzelne Teile mittels Trennschweißen in kleinere Teile zerlegt wird. Die Einzelteile des Dampferzeugers 32 werden dann einer Messung der Dosisleistung 25.2 zugeführt.
Kontaminierte Stahlteile 30 verlassen die Anlage über die Schleusen 1.1, 1.2. Dekontaminierte Teile werden der Nassdekontaminationsanlage 10 zugeführt, in der eine Dekontamination erfolgt. Die bearbeiteten Teile werden auf einer Pufferfläche 24 zwischengelagert. Teile, die entsprechend der Entscheidungsmessung im Vormessbereich 26 dekontaminiert sind, können die Anlage über den Ausgang für dekontaminiertes Material 27.4 zur Wiederverwertung verlassen.

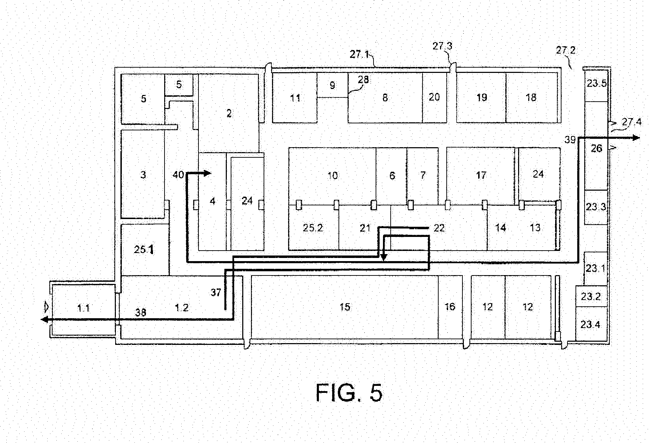

Die *Figur 5* zeigt die Anlage zur Bearbeitung von Reststoffen und den Weg von mineralischen Reststoffen 37 wie Betonteilen durch diese Anlage. Die mineralischen Reststoffe wie Betonteile, beispielsweise Betonplatten, die Bauelemente in einem Kraftwerksgebäude darstellen, werden mittels Container durch die äußere und innere Schleuse 1.1, 1.2 geliefert, entladen und mittels Portalkran in die Betonflächenbearbeitung 22 transportiert. Die kontaminierten Oberflächen können dann in der Betonflächenbearbeitung 22 abgeschliffen werden, wobei die kontaminierten abgeschliffenen Oberflächen der (Konrad-)Container-Verladung 4 zugeführt werden, während die dekontaminierten Betonriegel oder -platten 38 wieder durch die Betonflächenbearbeitung 22 und den Ausgang für dekontaminiertes Material 27.4 die Anlage verlassen. Andere kleine Betonteile können durch Betonbrecher 21, beispielsweise Backenbrecher, zerkleinert werden und, sofern sie kontaminiert sind, in der Konrad-Container-Verladung 4 in Endlagercontainer gefüllt werden und die Anlage durch die Schleusen 1.1, 1.2 in Richtung Endlager verlassen. Dekontaminierte gebrochene Betonteile 39 werden der Wiederverwertung zugeführt und verlassen die Anlage über den Ausgang für dekontaminierte Teile 27.4.

Weitere durch die Anlage mögliche Aufbereitungswege sind denkbar, beispielsweise für die Bearbeitung von Kabeln und anderen Teilen, die beim Rückbau eines Kraftwerkes anfallen und einer Verwertung zugeführt werden müssen.

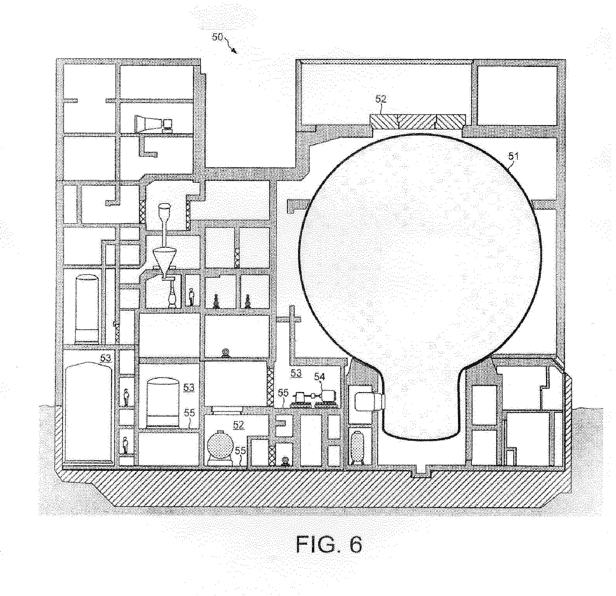

*Figur 6* zeigt den Querschnitt eines Kernkraftwerks 50, das abgebaut werden soll. Verschiedenste Nuklidvektoren können den einzelnen Gruppen von Metallteilen innerhalb des Sicherheitsbehälters 51 zugeordnet sein. Ein anderer Nuklidvektor kann den z-förmigen Betonabdeckriegeln 52 zugeordnet sein, die die Abdeckung des Sicherheitsbehälters 51 bilden. Ein weiterer Nuklidvektor kann dem Pumpenraum 53 zugeordnet sein, in welchem sich Maschinen und Behälter befinden, mit deren Hilfe Wasser durch das sekundäre Kühlsystem gepumpt wird. Häufige Ursache für eine radioaktive Kontamination ist eine Undichtigkeit im sekundären Kühlsystem, z.B. bei der Reparatur oder beim Austausch der Pumpen 54. Kontaminiertes Wasser läuft auf den Fußboden 55 des Pumpenraums 53 und rinnt unter die Pumpen, in die Ecken und in Risse und Hohlräume des Betonbodens. Figur 6 zeigt einen konzeptionellen Querschnitt eines Kernkraftwerkes 50, welches zurückgebaut wird.

Um die Reinigung und Dekontaminierung zu erleichtern sind die Fußböden 55, Wände und z-förmigen Betonabdeckriegel 52 des Kernkraftwerks 50 üblicherweise mit einer Zweikomponenten-Epoxidbeschichtung oder Urethan-Beschichtung versehen. Die Wände sind üblicherweise bis zu einigen Metern Höhe beschichtet. Nach einer Leckage beispielsweise kann der Boden abgewischt werden. Im Beton können sich jedoch Risse bilden und durch herunterfallende Teile können Vertiefungen entstehen. Kontamination kann nicht immer aus Spalten und Rissen entfernt werden.

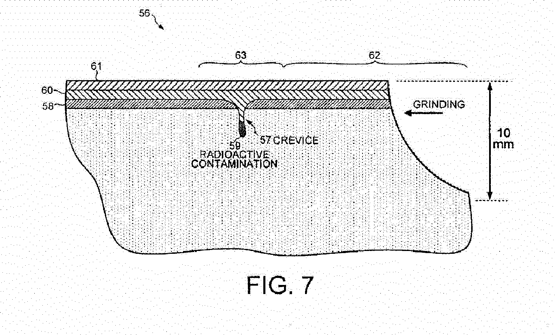

*Figur 7* zeigt einen Querschnitt des Betonfußbodens 56 in dem sich ein Riss gebildet hat, nachdem der Boden ursprünglich mit einem Dekontaminationslack 58 versehen war. Nach der Entstehung des Risses 57 im Boden trat radioaktive Flüssigkeit aus und gelangte in den Riss 57. Obwohl die kontaminierte Stelle nahezu vollständig gereinigt wurde, konnte die Kontamination an der tiefsten Stelle des Risses 57 nicht entfernt werden. Wie in solchen Fällen üblich, wurde der Betonfußboden 56 mit einer neuen Beschichtung 60 versehen, um die Kontamination zu versiegeln und um die zukünftige Reinigung sicherzustellen. Innerhalb der Laufzeit des Kernkraftwerks 50 wurden mehrere Beschichtungen auf den Betonfußboden 56 einschließlich der Deckschicht 61 aufgebracht. Die Wände und die z-förmigen Betonabdeckriegel 52 des Kernkraftwerkes 50 sind in ähnlicher Weise beschichtet.

Bei der Zerlegung eines Kernkraftwerkes ist die Kontamination im Beton üblicherweise nur bis zu einer Oberflächentiefe von ca. 4 mm vorhanden. Durch Abtragen der äußeren Schichten bis zu einer Stärke von ca. 10 mm kann der kontaminierte Anteil im Wesentlichen vollständig entfernt werden. Die äußere Schicht des Betonbodens, der Wände und Träger wird durch Abschleifen oder durch Abschlagen abgetragen. Bei einer Art des Abschlagens wird die Betonoberfläche mit tausenden Hammerschlägen in der Minute behandelt und somit die Deckoberfläche pulverisiert; dieser Staub wird dann abgesaugt. Eine detailliertere Beschreibung der Entfernung der kontaminierten Schicht durch Abschlagen wird im U.S.-Patent Nr. "5.037.159 to Nutter et al." genannt, das in dem hier vorliegenden Dokument referenziert wird.
Obwohl nur ca. 1 cm des Betons und der Beschichtung abgetragen werden, fällt dabei eine große Menge an möglicherweise kontaminierten Rückständen und kontaminiertem Staub an. Bei einer Ausführung fallen ca. 200 kg Staub in der Stunde an. Durch die Entfernung der oberen Betonschicht und durch die Bestimmung, welche Menge der dabei entstehenden Beton- und Farbpartikel den zulässigen Grenzwert zur Freimessung überschreitet, kann die Menge an radioaktivem Abfall, der dauerhaft eingelagert werden muss, bedeutend reduziert werden. Da in einem Ausführungsbeispiel nach Figur 7 beispielsweise die obersten 10 mm des Betons von rechts nach links abgetragen werden, ist es von Vorteil, den nicht kontaminierten Betonstaub aus Abschnitt 62 vom radioaktiv kontaminierten Staub aus Abschnitt 63 zu trennen. Es gibt momentan jedoch keine bekannte Methode mit der festgestellt werden kann, ob die Staubpartikel, die aufgesaugt werden, den Grenzwert für Radioisotope übersteigen, um sie beim Ausblasen zu trennen und entsprechend in den Container für freimessbares Material oder für radioaktive Abfälle zu sortieren. Üblicherweise werden Staubabfälle grundsätzlich als radioaktiver Abfall gelagert. Bekannte Methoden zur Messung von Radioaktivität sind nicht schnell genug, um die Grenzwerte in den Staubpartikeln zu messen, während diese durch die Rohre des Staubsaugers fliegen. Zudem haben die abgetragenen Partikel, die durch den Staubsauger transportiert werden, nicht genügend Masse um mit konventionellen Methoden messbar zu sein. Die vorliegende Erfindung bietet die Möglichkeit, die Radioaktivität des Staubs zu messen und diesen entsprechend in die Fässer für freizumessendes Material und radioaktiven Abfall zu unterteilen.

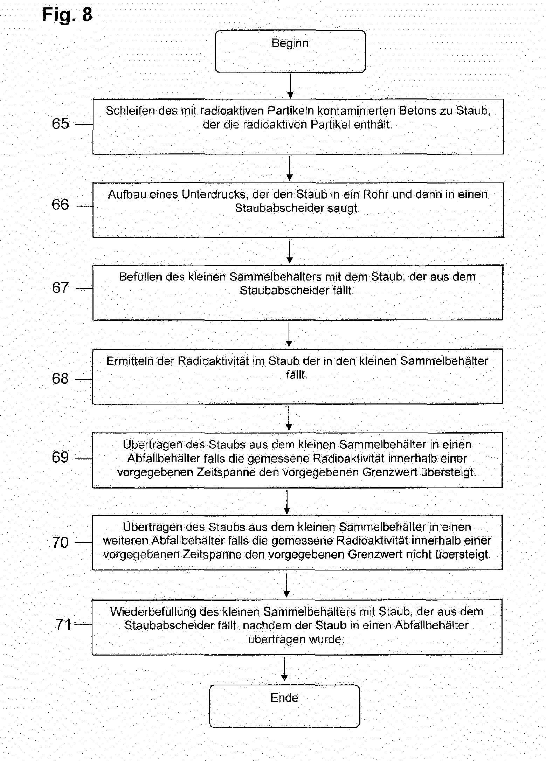

*Figur 8* zeigt in einem Flussdiagramm der Schritte 65-71 einer Methode, bei der Staub, der den Grenzwert überschreitet vom Staub, der unter dem Grenzwert liegt, getrennt wird. Bei dieser Ausführungsform liegt der Grenzwert, bis zu welchem das Material zur üblichen Abfallentsorgung freigegeben wird, bei 0,1 Bq/g (für Co-60).
In einem ersten Schritt des Flussdiagramms 65 wird der Beton, der mit radioaktiven Partikeln kontaminiert ist, durch Abschleifen oder Abmeißeln zu Staub verarbeitet. Dieser Staub entsteht z.B. wenn die Beschichtung 60-61 von der Betonoberfläche des Betonfußbodens 56 oder des z-förmigen Betonabdeckriegels 52 beim Abbau eines Kernkraftwerkes 50 entfernt wird. Der Staub enthält sowohl Beton- als auch Farbpartikel.
In Schritt 66 des Flussdiagramms wird ein Unterdruck aufgebaut, der den Staub zuerst in einen Schlauch 87 und dann in einen Staubabscheider 81 saugt. Der Unterdruck wird beispielsweise durch eine Vakuumpumpe 72 erzeugt, die räumlich getrennt am anderen Ende der Vakuumlinie angeordnet ist. Der Staub wird während des Abschleifens der Beschichtung abgesaugt.

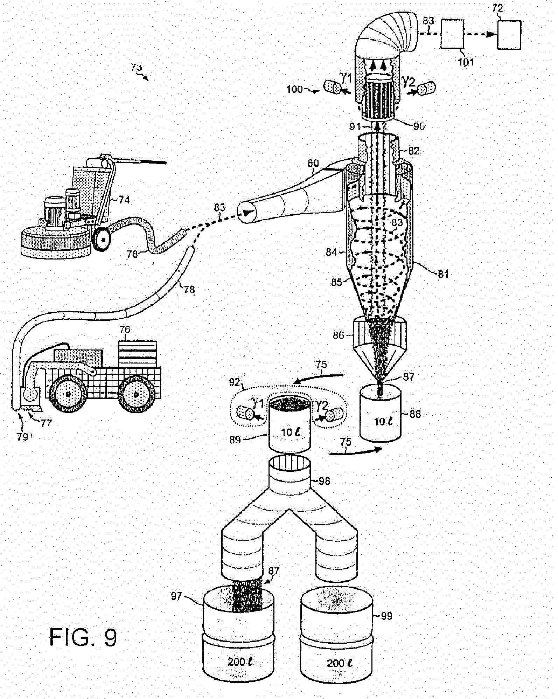

*Figur 9* zeigt ein System zur Abtrennung radioaktiv kontaminierten Materials 73 und veranschaulicht die Maschinen, die zur Durchführung des in Figur 8 beschriebenen Verfahrens benutzt werden. In Figur 9 ist eine Betonfräse, manuell 74 dargestellt, die die Deckschicht des Betonbodens mit Hilfe von drei diamantgeschliffenen, konisch geformten Schleiftöpfen abträgt. Bei einer Ausführungsform mit einer manuellen Betonfräse 74 wird ein PG820 von Husqvarna verwendet. Bei einer anderen Ausführung wird eine Betonfräse mit Fahrwerk, genannt The Moose, 76, hergestellt von Fa. Pentek, verwendet. Die Betonfräse mit Fahrwerk 76 entfernt die Deckschicht eines Betonbodens mit Hilfe von pendelnden, hartmetallbestückten Meißeln 77. Der Boden kann in Streifen von 30cm Breite geschliffen oder gemeißelt werden. Der hierbei entstehende Staub wird in einen Vakuumschlauch 78 gesaugt, dessen Absaugöffnung 79 nahe an der Stelle der Schleif- oder Meißelarbeiten positioniert ist. Der Staub gelangt durch den Vakuumschlauch 78 in den Einlass Staubabscheider 80 des Staubabscheiders 81. In der Ausführung in Figur 9 ist der Staubabscheider 81 ein Zyklonabscheider oder -filter. Figur 9 zeigt eine Schnittzeichnung eines Staubabscheiders 81 mit einem zylindrischen Aufsatz 82, der aus dem oberen Ende des Abscheiders herausragt. Die angesaugte Luft strömt durch den Einlass Staubabscheider 80 in den Staubabscheider 81 und tritt durch den zylindrischen Aufsatz 82 aus. Der Staubabscheider 81 hat einen zylindrischen Mantel 84, ein konisches Unterteil 85 und keine beweglichen Teile. Durch die Zentrifugalkraft, die durch die Tangential-Geschwindigkeit der Luft bei der Abwärtsbewegung entlang der Innenwände des Staubabscheiders 81 entsteht, werden die Staubpartikel 87 vom Luftstrom 83 getrennt. Bei manchen Ausführungsarten wird ein schneckenförmiges Lenkblech um die Außenseite des zylindrischen Aufsatzes 82 im oberen Ende des zylindrischen Mantels 84 angebracht, um den Fluss des ankommenden Luftstroms 83 in eine Abwärtsspirale zu lenken. Der Staub 87 wird dann durch die Bodenöffnung im konischen Unterteil geleitet, während der Luftstrom 83 durch die Mitte des Staubabscheiders 81 steigt und ihn durch den zylindrischen Aufsatz 82 verlässt. Der Staubabscheider 81 hat einen unteren konischen Auffangbehälter 86 mit einer schmaleren Bodenöffnung, durch die der Staub 87 in einen der beiden kleinen Sammelbehälter 88/89 fällt.
Der Staubabscheider 81 ist gut geeignet, um den kontaminierten Betonstaub aus dem Luftstrom 83 zu filtern, da der Staubabscheider 81 kein Filtermembran hat, das geleert werde muss oder sich zusetzen könnte. Da der Staubabscheider 81 keine beweglichen Teile hat, kann er über einen längeren Zeitraum ohne Wartungsarbeiten betrieben werden. Obwohl der Staubabscheider 81 den größten Teil des Staubs 87 aus dem Luftstrom 83 filtert, wandern viele Staubpartikel mit einem kleineren Durchmesser als 0,5mm mit dem Luftstrom 83 nach oben und durch den zylindrischen Aufsatz 82. Ein Filter, wie ein keramischer rückblasbarer Kerzenfilter 90, ist über dem zylindrischen Aufsatz 82 angeordnet und wird dazu genutzt, Staubpartikel mit einem Durchmesser kleiner 0,5 mm herauszufiltern. Der Luftstrom 83 fließt durch das Unterteil des keramischen rückblasbaren Kerzenfilters 90 hinein und durch die Seiten des Zylinders hinaus. Somit verbleiben die kleinen Partikel des Staubs 87 an der Innenseite des Zylinders.
Ein Feinpartikel-Kuchen baut sich am Filterelement auf. Wenn der Kuchen dicker wird, brechen Staubklumpen 91 ab und fallen zurück durch den Staubabscheider 81 und in die kleinen Sammelbehälter 88/89, die mit den größeren Staubpartikeln gefüllt sind.

Während des Betriebes wird der rückblasbare Kerzenfilter 90 durch einen entgegengesetzten Luftdruckstoß gereinigt. Dieser Vorgang entfernt den kompletten Feinpartikel-Kuchen vom Filterelement. Der Kuchen, bestehend aus Staubklumpen 91, fällt zum Boden des Staubabscheiders 81 und in die kleinen Sammelbehälter 88/89. Die Filterreinigung wird periodisch durchgeführt, um den keramischen rückblasbaren Kerzenfilter 90 sauber zu halten.
In Schritt 67 des Flussdiagramms (Figur 8) wird ein kleiner Sammelbehälter 88 oder 89 mit dem Staub 87 und 91 gefüllt, der aus dem Staubabscheider 81 fällt.
Während der Befüllung sind beide kleinen Sammelbehälter 88 und 89 mit Hilfe einer Fördereinrichtung 75 unter dem Staubabscheider 81 positioniert. Jeder kleine Sammelbehälter 88 und 89 hat ein Fassungsvermögen von ca. 10 l, was in etwa 7 kg Betonstaub entspricht. Dieser wiederum hat eine Dichte von ca. 700kg/m³. Es dauert etwas mehr als 2 Minuten, die beiden 10-l-Behälter 88 und 89 zu füllen, wenn eine Betonfräse mit Fahrwerk 76 oder eine Betonfräse, manuell 74 verwendet werden, die ca. 200 kg Betonstaub pro Stunde erzeugt. Sobald ein kleiner Sammelbehälter 88 oder 89 mit Betonstaub gefüllt ist, wird er mit Hilfe der Fördereinrichtung 75 in ein Aktivitätsmessgerät 92 transportiert, z. B. gefahren, der andere kleine Sammelbehälter 89 wird unter dem Staubabscheider 81 in Position gebracht, so dass dessen Befüllung beginnen kann. In Figur 9 ist der kleine Sammelbehälter 89 mit Staub befüllt und wurde in das Aktivitätsmessgerät 92 verbracht. Der kleine Sammelbehälter 88 wird mit Staub 87 und 91 befüllt.
In Schritt 68 des Flussdiagramms (Figur 8) wird mit Hilfe des Aktivitätsmessgeräts 92 die Radioaktivität des Staubs im kleinen Sammelbehälter 89 gemessen. Das Messgerät 92 nutzt das Koinzidenzverfahren um die Aktivität des Radionuklids Kobalt-60 im Staub 87 und 91 zu ermitteln.

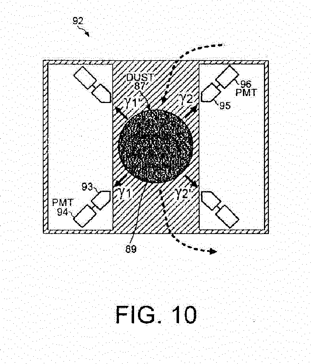

*Figur 10* stellt das nach dem Koinzidenzverfahren arbeitende Cobalt-Coincidence-Messgerät 92 detaillierter dar. Das Aktivitätsmessgerät 92 hat zwei entgegengesetzt angeordnete Sätze von Gammadetektoren, die um 90 Grad versetzt zueinander ausgerichtet sind. Ein Gammastrahlen-Detektor besteht aus einem Plastik-Szintillationsdetektor 93 kombiniert mit einem schnellen Photomultiplier (PMT) 94, der das vom Plastik-Szintillationsdetektor 93 abgegebene Licht verstärkt. Der Plastik-Szintillationsdetektor 93 ist mit einem Kristall ausgerüstet, der Licht abgibt, sobald Gamma-Strahlen eintreffen. Die Intensität des Lichts ist proportional zur Stärke der Gamma-Strahlung. Der Plastik-Szintillationsdetektor 93 ist mit dem schnellen Photomultiplier 94 gekoppelt, der das Licht in Elektronen umwandelt und dann die von den Elektronen erzeugten elektrischen Impulse verstärkt. Ein zweiter Gammadetektor befindet sich direkt gegenüber dem ersten Gammadetektor und ist mit einem weiteren Plastik-Szintillationsdetektor 95 und einem weiteren schnellen

Photomultiplier 96 ausgestattet. Der zweite Satz Gammadetektoren ist um 90 Grad versetzt zur Achse des ersten Satzes Gammadetektoren ausgerichtet, um eine breitere Abdeckung des 360-Grad-Emissionsbereiches zu erreichen. Bei einer Ausführungsart ist das Aktivitätsmessgerät 92 eine modifizierte Version des Großraummonitors (LAM12) des Herstellers Thermo Scientific aus Erlangen. Das Aktivitätsmessgerät 92 misst die Aktivität durch Zählen und Bestimmen der Winkelkorrelationen von zwei aufeinanderfolgenden Gammastrahlen, die von jedem im Staub vorhandenen Kobalt-60-Isotop abgegeben wird. Das Koinzidenzverfahren registriert eine Gamma-Strahlung (γ1) aus dem Zerfall eines Kobalt-60-Isotops im Plastik-Szintillationsdetektor 93 und eine andere Gamma-Strahlung (γ2) aus demselben Zerfall im Plastik-Szintillationsdetektor 95. Das Aktivitätsmessgerät 92 zählt dann nur die Koinzidenzen, die ebenfalls gleichzeitig durch die beiden gegenüberliegenden Plastik-Szintillationsdetektoren 93, 95 registriert wurden. Auf diese Art und Weise kann die Untergrundstrahlung erkannt und entsprechend in der Auswertung herausgerechnet werden. Die Anzahl der Kobalt-60-Isotope pro Sekunde werden erfasst und in Becquerel benannt (Anzahl in der Sekunde).
Es werden jedoch nicht alle Gammastrahl-Paare aus dem Zerfall von Kobalt-60-Isotope von dem Aktivitätsmessgerät 92 als Treffer erfasst. Die Wahrscheinlichkeit, dass ein abgegebenes Gammastrahl-Paar als Treffer erfasst wird, ist gleichbedeutend mit der Ansprechwahrscheinlichkeit des Aktivitätsmessgerätes 92 oder des Detektors; diese wird in Prozent angegeben. Bei der Bestimmung, ob der Grenzwert erreicht wurde, muss die Ansprechwahrscheinlichkeit des Detektors berücksichtigt werden. Liegt die Ansprechwahrscheinlichkeit des Aktivitätsmessgerätes (Detektors) beispielsweise bei 40%, so muss die Anzahl der Treffer mit 2,5 multipliziert werden, um die tatsächliche Anzahl der Treffer in der Sekunde zu ermitteln.
Das Cobalt-Coincidence-Verfahren zur Messung der Radioaktivität ist schneller als andere Verfahren und kann während der Befüllung des kleinen Sammelbehälters 88 feststellen, ob der Staub im zuerst befüllten kleinen Sammelbehälter 89 zur allgemeinen Entsorgung freigegeben werden kann, da der Staub einen nuklearen Zerfall unterhalb der Freigabegrenze von 0,1 Bq/g oder 100 Bq/kg aufweist. Jeder der kleinen Sammelbehälter 88 und 89 hat ein Fassungsvermögen von ca. 7 kg Staub, so dass die Freigabegrenze überschritten wird, wenn das Aktivitätsmessgerät 92 einen um die Ansprechwahrscheinlichkeit bereinigten Gegenwert von mehr als 700 tatsächlichen Treffern pro Sekunde oder 7000 Treffern pro 10 Sekunden ermittelt. Da 2 Minuten zur Befüllung jedes 10-l-Behälters 88 und 89 benötigt werden kann die Aktivitätsmessung innerhalb des 10-Sekundenintervalls durchgeführt werden, rechtzeitig bevor der kleine Sammelbehälter 89 auf die Position unterhalb des Staubabscheiders 81 zurückgefahren werden muss, um das nächste Quantum an Staub 87 und 91 aufzunehmen.

In Schritt 69 des Flussdiagramms (Figur 8) wird der Staub 87 und 91 aus dem kleinen Sammelbehälter 89 in einen Abfallbehälter 97 verlagert, wenn die innerhalb einer vorgegebenen Zeitspanne festgestellte Aktivität einen vorgegebenen Grenzwert übersteigt. In einer ersten Ausführung ist die Zeitspanne mit 10 Sekunden vorgegeben, der vorgegebene Grenzwert ist 0,1 Bq/g oder 7000 Treffer innerhalb dieser 10 Sekunden bei 7 kg Staub im kleinen Sammelbehälter 89. In einer zweiten Ausführung liegt die vorgegebene Zeitspanne bei 1 Sekunde, der vorgegebene Grenzwert ist 700 Treffer innerhalb jeder Sekunde bei 7 kg Staub im kleinen Sammelbehälter 89. In der zweiten Ausführung wird die Aktivitätsmessung zehn Mal durchgeführt und der vorgegebene Grenzwert gilt als überschritten, wenn die tatsächlichen Treffer während der im Durchschnitt zehn vorgegebenen Zeitspannen bei mehr als 700 liegen.
In einer Ausführung ist der Abfallbehälter 97 ein Metallfass mit einem Fassungsvermögen von 200 l, das das Volumen von 20 kleinen Sammelbehältern 88 und 89 mit radioaktivem Staub aufnehmen kann. Figur 9 zeigt den Fall, dass das Aktivitätsmessgerät 92 einen Aktivitätswert im Staub des kleinen Sammelbehälters 89 festgestellt hat, der den vorgegebenen Grenzwert übersteigt. Der Staub wird mit Hilfe einer Zweiwegeklappe 98 in den Abfallbehälter 97 geleitet. Das Ventil in der Zweiwegeklappe 98 leitet den Staub aus dem kleinen Sammelbehälter 89 in den Abfallbehälter 97. In einer Ausführung wird die Zweiwegeklappe 98 von Fa. EMDE, Zierenberg, Deutschland, gefertigt. Dadurch, dass nur die geringere Menge an Staub, die eine höhere Aktivität aufweist, in den Abfallbehälter 97 geleitet wird, wird auch nur eine geringere Gesamtmenge an stärker aktiviertem Staub erzeugt, die sicherer und wirtschaftlicher gelagert werden kann. Dieser stärker aktivierte Staub wird später in Konrad-Container verpackt und zur Endlagerung transportiert.
In Schritt 70 des Flussdiagramms (Figur 8) wird der Staub 87 und 91 aus dem kleinen Sammelbehälter 89 in einen Abfallbehälter 99 geladen, falls der gemessene Aktivitätswert innerhalb der vorgegebenen Zeit den vorgegebenen Grenzwert nicht übersteigt. Dieser Abfallbehälter 99 ist für freigegebenes Material vorgesehen, das zusammen mit allgemeinem Bauschutt entsorgt werden kann. In dieser Ausführung transportiert die Zweiwegeklappe 98 den aus dem kleinen Sammelbehälter 89 heraus sortierten Staub in den Abfallbehälter 99, vorausgesetzt, das Aktivitätsmessgerät 92 ermittelt eine Ansprechwahrscheinlichkeit von weniger als 7000 tatsächlichen Treffern in den 7 kg Staub aus dem kleinen Sammelbehälter 89 während des 10 Sekunden andauernden Messintervalls.
In Schritt 71 des Flussdiagramms (Figur 8) wird der kleine Sammelbehälter 89 wieder mit Staub 87 und 91 befüllt, der aus dem Staubabscheider 81 fällt, nachdem der Staub entweder zu dem Abfallbehälter 97 oder zum Abfallbehälter 99 in den Schritten 69-70 des Flussdiagramms verlagert wurde. Jeder der kleinen Sammelbehälter 88 und 89 wird in das Aktivitätsmessgerät 92 eingebracht, nachdem es mit Staub befüllt wurde. Nach Ablauf des vorgegebenen Zeitintervalls kann der Staub durch den Boden des kleinen Sammelbehälters in die Zweiwegeklappe 98 fallen, durch das der Staub entweder in den Abfallbehälter 97 oder in den Abfallbehälter 99 fällt. In einer Ausführung kann der Boden des kleinen Sammelbehälters geöffnet werden um den Staub durch die Öffnung im Boden des Aktivitätsmessgeräts 92 und in die 98 fallen zu lassen. Sobald der kleine Sammelbehälter 88 oder 89 geleert ist, wird er aus dem Aktivitätsmessgerät 92 entfernt und wieder unter dem Staubabscheider 81 positioniert, wo der kleine Sammelbehälter wieder mit Staub befüllt wird. In einer anderen Ausführung enthält das System zur Abtrennung radioaktiv kontaminierten Materials 73 einen zweiten Detektor 100, der den keramischen rückblasbaren Kerzenfilter 90 umgibt. Die kleineren Staubpartikel, die sich an der Innenwand des keramischen rückblasbaren Kerzenfilters 90 ansammeln, kommen aus der Absaugöffnung 79 im keramischen rückblasbaren Kerzenfilter 90 an, bevor die größeren Staubpartikel aus der Bodenöffnung des Staubabscheiders 81 fallen und noch weit bevor der kleine Sammelbehälter 88-89 befüllt und die Aktivität des kleinen Sammelbehälters gemessen wird. Somit liefert die Aktivitätsmessung des Staubs 91 am keramischen rückblasbaren Kerzenfilter 90 einen frühzeitigen Hinweis, dass radioaktiv kontaminierter Staub im Staubabscheider 81 ankommt und in den kleinen Sammelbehälter 88-89 fällt. Es wird angenommen, dass sich mindestens 100 g Staub am keramischen rückblasbaren Kerzenfilter 90 ansammeln, d.h., der vorgegebene Grenzwert von 0,1 Bq/g zur Ermittlung von radioaktiv kontaminiertem Staub entspricht einer tatsächlichen Trefferquote von mind. 600 innerhalb der vorgegebenen Zeitspanne von 60 Sekunden. In einer Ausführung werden die gesamten Kobalt-60-Zerfälle innerhalb einer fortlaufenden 60-Sekunden-Zeitspanne gezählt. In einer anderen Ausführung ist die vorgegebene Zeitspanne ein Zeitfenster von 60 Sekunden. In jeder Sekunde ermittelt der zweite Detektor 100, ob mindestens 600 tatsächliche Treffer während der letzten 60 Sekunden aufgetreten sind.
Sollte der Aktivitätslevel, der innerhalb der vorgegebenen Zeitspanne von 60 Sekunden vom Detektor 100 gemessen wurde, den Grenzwert von 600 tatsächlichen Treffern übersteigen, so wird der mit Staub gefüllte kleine Sammelbehälter 88 oder 89 sofort in den Abfallbehälter 97 für radioaktiven Abfall entleert, ohne die Fertigstellung der Befüllung des kleinen Sammelbehälters abzuwarten. Dann beginnt die Füllung des kleinen Sammelbehälters von neuem und wird fortgeführt, solange der vorgegebene Grenzwert innerhalb einer entsprechend vorgegebenen Zeitspanne nicht überschritten wird. Die Aktivitätsmessung des Detektors 100 wird regelmäßig während der Rückblasphase unterbrochen, während der keramische rückblasbare Kerzenfilter 90 gereinigt wird.
Das System zur Abtrennung radioaktiv kontaminierten Materials 73 beinhaltet auch einen Polizeifilter 101, der nach dem keramischen rückblasbaren Kerzenfilter 90 angeordnet ist, um die Partikel abzufangen, die möglicherweise den keramischen rückblasbaren Kerzenfilter 90 passiert haben. Der Polizei- oder Notfallfilter 101 muss nur selten gewechselt werden und kann im Abfallbehälter 97 entsorgt werden, ohne die Menge des radioaktiven Abfalls maßgeblich zu vergrößern.
In wiederum einer weiteren Ausführung ist die festgelegte Zeitspanne, während derer das Aktivitätsmessgerät 92 die Aktivität des Staubs 87 und 91 misst, auf 1 Sekunde reduziert, um einen konstanteren Fluss und eine fortdauernde Trennung des kontaminierten Staubs von freigegebenem Staub zu ermöglichen. Der Freigabe-Grenzwert bleibt bei 0,1 Bq/g bestehen. Anstatt der Zählung eines um die Ansprechwahrscheinlichkeit bereinigten Gegenwerts von mind. 7000 Treffern innerhalb von 10 Sekunden wird der Freigabe-Grenzwert erhöht, wenn das Aktivitätsmessgerät 92 mehr als 700 tatsächliche Treffer aus den 7 kg Staub im kleinen Sammelbehälter 88-89 innerhalb der vorgegebenen Zeitspanne von 1 Sekunde ermittelt.

### Liste der verwendeten Bezugszeichen

- 1: Schleusenbereich
- 1.1: äußere Schleuse
- 1.2: innere Schleuse
- 2: Hochdruck Presse
- 3: Trocknung/Fassmessanlage
- 4: Konrad-Container-Verladung
- 5: Sperrbereichslager
- 6: Schleuderradanlage
- 7: Handstrahlbox
- 8: Nassdekontamination mit Hochdruck-Wasserstrahlen
- 9: Ultraschallbad
- 10: Nassdekontamination mit PHADEC-Anlage
- 11: Boxenwaschanlage
- 12: Thermische Zerlegung (28)
- 13: Manuelle Zerlegung (28)
- 14: Dünnblechverarbeitung (28)
- 15: Großkomponentenzerlegung (als Großkomponentenzelt) (28)
- 16: Bandsäge (groß)
- 17: Kabelbearbeitung (28)
- 18: Asbestkonditionierung (28)
- 19: Sortierzelt für radioaktiven Abfall (28)
- 20: Sortierzelt für nichtradioaktiven Abfall (28)
- 21: Betonbrecher (28)
- 22: Betonflächenbearbeitung (28)
- 23: Lager- und Gebäudetechnik
- 23.1: Putz- und Serviceraum
- 23.2: Öl- und Flüssigkeitslager
- 23.3: Stapler-Ladefläche
- 23.4: Werkzeugausgabe
- 23.5: Strahlenschutz-Glaskasten
- 23.6: Büroraum
- 24: Pufferbereiche
- 25: Feste Wände im Gebäude
- 25.1: Schmelzmaterialverladung
- 25.2: Cobalt-Coincidence(CC) -Messung
- 26: Vormessbereich
- 27: Gebäude
- 27.1: dekontaminierte Gebäudeschichtung (innen)
- 27.2: Ein- und Ausgang für Personen
- 27.3: Notausgang
- 27.4: Ausgang für freimessbares Material (Material, das unterhalb der radiologischen Grenzwerte gemäß Strahlenschutzverordnung liegt)
- 28: flexible Wand
- 29: Transportwege
- 30: Stahlteile, kontaminiert
- 31: Stahlteile, freimessbar
- 32: Großkomponenten (Dampferzeuger)
- 33: Div. Reststoffe, kontaminiert
- 34: Radioaktiver Abfall, nicht brennbar
- 35: Radioaktiver Abfall, brennbar
- 36: Nicht-Radioaktiver Abfall, brennbar
- 37: Mineralische Reststoffe
- 38: Betonriegel, freimessbar
- 39: Betonbruch, freimessbar
- 40: Betonbruch, kontaminiert
- 41: 20"-Container
- 42: Abwasseraufbereitung mit Verdampferanlage, Konzentratsammelbehälter, Vorlagebehälter, Destillatbehälter
- 43: Strahlmittelaufbereitung
- 44: Hydraulikaggregat für Hochdruck-Presse (2)
- 45: Vormessbereich
- 50: Kernkraftwerk
- 51: Sicherheitsbehälter
- 52: z-förmige Betonabdeckriegel
- 53: Pumpenräume
- 54: Pumpen
- 55: Fußboden
- 56: Betonfußboden
- 57: Riss
- 58: Dekontaminationslack
- 59: Kontamination
- 60: Beschichtung
- 61: Deckschicht, obere Lage der Beschichtung
- 62: Bereich, von dem nicht kontaminiertes Material abgefräst wurde
- 63: Bereich, von dem kontaminiertes Material abgefräst wurde
- 65: Schleifen des mit radioaktiven Partikeln kontaminierten Betons zu Staub, der die radioaktiven Partikel enthält
- 66: Aufbau eines Unterdrucks, der den Staub in ein Rohr und dann in einen Staubabscheider saugt
- 67: Befüllen des kleinen Sammelbehälters mit dem Staub, der aus dem Staubabscheider fällt
- 68: Ermitteln der Radioaktivität im Staub der in den kleinen Sammelbehälter fällt
- 69: Übertragen des Staubs aus dem kleinen Sammelbehälter in einen Abfallbehälter falls die gemessene Radioaktivität innerhalb einer vorgegebenen Zeitspanne den vorgegebenen Grenzwert übersteigt
- 70: Übertragen des Staubs aus dem kleinen Sammelbehälter in einen weiteren Abfallbehälter falls die gemessene Radioaktivität innerhalb einer vorgegebenen Zeitspanne den vorgegebenen Grenzwert nicht übersteigt
- 71: Wiederbefüllung des kleinen Sammelbehälters mit Staub, der aus dem Staubabscheider fällt, nachdem der Staub in einen Abfallbehälter übertragen wurde.
- 72: Vakuumpumpe
- 73: System für die Abtrennung radioaktiv kontaminierten Materials
- 74: Betonfräse manuell
- 75: Fördereinrichtung
- 76: Betonfräse mit Fahrwerk
- 77: Pendelnde hartmetallbestücke Meißel (Wolframcarbid)
- 78: Vakuumschlauch
- 79: Absaugöffnung
- 80: Einlass Staubabscheider
- 81: Staubabscheider
- 82: Zylindrischer Aufsatz
- 83: Luftstrom
- 84: Zylindrischer Mantel
- 85: Konisches Unterteil
- 86: Unterer konische Auffangbehälter
- 87: Staub
- 88: Kleiner Sammelbehälter
- 89: Kleiner Sammelbehälter
- 90: Keramischer, rückblasbarer Kerzenfilter
- 91: Staubklumpen
- 92: Aktivmessgerät, Detektor
- 93: Plastik-Szintillationsdetektor
- 94: Schneller Photomultiplier
- 95: Plastik-Szintillationsdetektor
- 96: Schneller Photomultiplier
- 97: Abfallbehälter
- 98: Zweiwegeklappe
- 99: Abfallbehälter
- 100: Detektor
- 101: Polizeifilter (Notfilter)

## Patentansprüche

1. Anlage zur Bearbeitung von aktivierten, kontaminierten und/oder nicht kontaminierten Reststoffen, bei der in modularer Bauweise bei geringer Strahlenbelastung und geringem Transportaufwand aktivierte, kontaminierte und/oder nicht kontaminierte Reststoffe oder Abfälle entkoppelt vom Rückbau und unabhängig von einer konkreten kerntechnischen Anlage nach einer Trennung und/oder einer Dekontamination einer Wiederverwertung, einer Deponie oder einem Abfalllager zugeführt werden, bestehend aus
- einer Anlagefläche in einem Gebäude (27) mit einem Ein- und Ausgang (27.2, 27.3) für Personal,
- mindestens einem Zugang für Material, der als Schleuse (1, 1.1, 1.2) für kontaminierte Teile ausgeführt ist,
- mindestens einem Ausgang (27.4) für abzugebendes Material (31), welches dekontaminiert ist,
- mindestens einem Ausgang (1, 1.1., 1.2) für beschränkt freigebbares Material oder radioaktiven Abfall,
- Bearbeitungsstationen (12, 13, 14, 15, 16, 17, 18, 19, 20, 21, 22), die durch flexible, verstellbare Wände (28) voneinander getrennt sind, so dass deren Fläche entsprechend dem erforderlichen Durchsatz mit geringem Aufwand vergrößert, verkleinert oder umgestellt werden kann,
- Bearbeitungsstationen (2, 3, 4, 5), die durch feste Wände (25) voneinander getrennt sind, sowie
- Transportbehältern, Transportmitteln und Lagerräumen und -bereichen, wobei Bearbeitungsstationen, an denen eine hohe Dosisleistung auftritt, in einem Bereich für hohe Dosisleistung weit entfernt vom Personalein- und -ausgang (27.2, 27.3) und vom Ausgang (27.4) für abzugebendes dekontaminiertes Material (31) angeordnet sind.

2. Anlage nach Anspruch 1, **dadurch gekennzeichnet, dass** das Gebäude (27) mit einer leicht dekontaminierbaren Beschichtung (27.1) versehen ist.

3. Anlage nach Anspruch 1 oder 2, **dadurch gekennzeichnet, dass** die Bearbeitungsstationen eine Großkomponentenzerlegung (15), eine thermische Zerlegung (12), eine manuelle Zerlegung (13), eine Dünnblechverarbeitung (14), eine Kabelbearbeitung (17), eine Asbestkonditionierung (18), ein Sortierzelt für radioaktiven Abfall (19), ein Sortierzelt für nicht radioaktiven Abfall (20), einen Betonbrecher (21), eine Betonflächenbearbeitung (22), eine Boxenwaschanlage (11), eine Nassdekontamination (8, 10), ein Ultraschallbad (9), eine Trockenstrahlanlage, eine Schleuderradanlage (6), eine Handstrahlbox (7), eine Hochdruckpresse (2), eine Konrad-Container-Verladung (4) und eine Trocknung/Fassmessanlage (3) umfassen.

4. Anlage nach Anspruch 3, **dadurch gekennzeichnet, dass** die Betonoberflächenbearbeitung (22) eine Betonfräse (74, 76) aufweist, die dazu geeignet ist kontaminierte Oberflächen (58, 60, 61) von Betonteilen abzutragen und mittels Vakuumpumpe (72) in einen der Betonfräse (74, 76) nachgeschalteten Staubabscheider (81) abzusaugen, wobei der Staubabscheider so konfiguriert ist, dass der überwiegende Teil eines Staubes (87) nach unten und der überwiegende Teil eines Luftstromes (83) nach oben abgetrennt wird und dem Staubabscheider (81) ein Aktivitätsmessgerät (92) nachgeschaltet ist, welches so konfiguriert ist, dass es die Strahlenbelastung des Staubes (87) misst.

5. Anlage nach Anspruch 4, **dadurch gekennzeichnet, dass** zwischen Staubabscheider (87) und Vakuumpumpe (72) ein Filter (90, 101) zum Abtrennen feiner Staubpartikel angeordnet ist.

6. Anlage nach Anspruch 4 und 5, **dadurch gekennzeichnet, dass**, das Aktivitätsmessgerät (92) ein Cobalt-Coincidence-Messgerät darstellt, dem eine Zweiwegeklappe (98) nachgeschaltet ist, die den Staub (87) in einem Abfallsammelbehälter (97) für kontaminiertes Material oder einen Abfallbehälter (99) für freigegebenes Material leitet.

7. Anlage nach einem der Ansprüche 4 bis 6, **dadurch gekennzeichnet, dass** am Filter (90) als Detektor (100) ein Cobalt-Coincidence-Messgerät angeordnet ist.

8. Verfahren zur Bearbeitung aktivierter, kontaminierter und nicht kontaminierter Reststoffe aus dem Rückbau kerntechnischer Anlagen, wobei die Bearbeitung entkoppelt vom Rückbau und unabhängig von einer konkreten kerntechnischen Anlage stattfindet mit dem Ziel, die Reststoffe weitestgehend einer Wiederverwertung zuzuführen, wobei die Reststoffe einer Anlage nach den Merkmalen von Anspruch 1 zugeführt und in Bearbeitungsstationen bearbeitet werden, wonach eine Entscheidungsmessung stattfindet, und wobei die dekontaminierten Reststoffe einer Wiederverwertung und die kontaminierten Reststoffe und radioaktive Abfälle einem Endlager zugeführt werden.

9. Verfahren nach Anspruch 8 zur Bearbeitung kontaminierter metallischer Reststoffe wie Stahlteile (30) **gekennzeichnet dadurch, dass**
- die kontaminierten Stahlteile (30) in einem ersten Schritt eine Schleuse (1, 1.1, 1.2) durchlaufen, in der sie registriert und ggf. aus den Transportbehältern mit geeigneten Geräten entnommen werden,
- die kontaminierten Stahlteile (30) einer manuellen Zerlegung (12) oder/und einer Dünnblechverarbeitung (14) zugeführt werden, in der sie mechanische-thermisch zerlegt werden,
- die kontaminierten und zerlegten Stahlteile (30) einer Nassdekontamination (10) oder einer Dekontamination mittels Hochdruckreinigung (8), einem Trockenstrahlverfahren, einem Muldenstrahlverfahren, einem Schleuderradverfahren (6) oder einem Strahlboxverfahren (7) zugeführt werden,
- die behandelten Teile einer Entscheidungsmessung zugeführt werden, wonach kontaminierte Stahlteile (30) die Anlage über die Schleuse (1, 1.2, 1.1) und freimessbares Material die Anlage über den Ausgang für freimessbares Material (27.4) verlässt.

10. Verfahren nach Anspruch 8, **gekennzeichnet durch** eine Bearbeitung mineralischer Reststoffe wie Bauschutt durch
- eine Vormessung des Bauschuttes
- eine Einteilung als konventioneller oder radioaktiver Abfall
- eine Siebung und eine Grobzerkleinerung des konventionellen Abfalls mit einer anschließenden Vor- und Entscheidungsmessung und Verpackung des konventionellen Abfalles für eine Deponie oder Wiederverwertung und
- eine Siebung und eine Grobzerkleinerung des radioaktiven Abfalles und
- ein Verfüllen in einen Container für ein Lager und
- einen Abtransport des Abfalls.

11. Verfahren nach Anspruch 8, **gekennzeichnet durch** eine Bearbeitung von Reststoffen wie Kabel durch
- eine Dekontamination der Kabel mittels Wischen oder einem anderem geeignetem Verfahren
- ein Schälen der Kabel
- ein Shreddern der Kabel und der abgeschälten Teile
- eine Entscheidungsmessung der geschälten und geshredderten Teile des Kabels, wonach
- ein Verpacken und Recyceln von wiederverwendbaren Reststoffen und
- ein Verfüllen von kontaminierten Reststoffen in einen Abfallbehälter mit einem anschließenden Transport und einer Lagerung.

12. Verfahren nach Anspruch 8, **gekennzeichnet durch** eine Bearbeitung Reststoffe wie Abfälle durch
- ein Sortieren der Abfälle in konventionelle und radioaktive Abfälle, wobei die konventionellen brennbaren Abfälle gepresst und einer Vor- und Entscheidungsmessung zugeführt werden, wonach die unbelasteten Abfälle einer externen konventionellen Verbrennung zugeführt werden und
- die radioaktiven Abfälle in brennbare und nicht brennbare Abfälle getrennt werden, wobei die brennbaren radioaktiven Abfälle gepresst und einer Dosierleistungs- und Kontaminationsmessung und einer externen Verbrennung zugeführt werden und die radioaktiven nicht brennbaren Abfälle einer Hochdruckpresse und einer Trocknung zugeführt werden und
- die radioaktiven, verbrannten und gepressten und getrockneten Abfälle in einem Container oder einem anderem geeigneten Behälter verfüllt und abtransportiert und gelagert werden.

13. Verfahren nach Anspruch 8 zur Bearbeitung mineralischer Reststoffe wie Betonteile, **gekennzeichnet durch**
- Transport mineralischer Reststoffe (37) durch den Schleusenbereich (1, 1.1, 1.2) in die Anlage zur Betonbearbeitung (22),
- ggf. Zerlegung großer Betonteile und Entfernen der die Kontaminationsmessung behindernden Teile,
- eine Oberflächenbehandlung sowie einen Oberflächenabtrag zur Dekontamination,
- eine Vor- und Entscheidungsmessung,
- eine Zuordnung zu konventionellem freimessbarem Abfall- und Reststoff oder einem radioaktiven Abfall und
- Transport des kontaminierten Betonbruches (40) in die Konrad-Container-Verladung (4) und weiter in ein Endlager,
- Transport eines freimessbaren Betonriegels (38) über den Schleusenbereich (1, 1.1., 1.2) aus der Anlage und
- Transport des freimessbaren Betonbruches (39) über den Ausgang (27.4) für freimessbares Material aus der Anlage.

14. Verfahren nach Anspruch 13, **gekennzeichnet durch**
- Abtragen einer kontaminierten Oberfläche (58, 60, 61) eines Betonteils und Absaugen des entstehenden Staubes (87) durch eine Luftstrom (83) in einen Abscheider (81),
- Trennen von Staub (87) und Luftstrom (83) im Abscheider (81),
- Trennen von feinen Reststaubpartikeln aus dem Luftstrom (83) mittels eines Filters (90, 101),
- Ermitteln der Radioaktivität der Staubpartikel (87) nach dem Abscheidevorgang mit einem Aktivitätsmessgerät (92),
- Übertragen der Staubpartikel (87) in einen Abfallbehälter (97) für kontaminiertes Material, wenn die gemessene Radioaktivität innerhalb einer vorgegebenen Zeitspanne einen vorgegebenen Grenzwert überschreitet,
- Übertragen der Staubpartikel (89) in einen Abfallbehälter (99) für freimessbares Material, wenn die gemessene Radioaktivität innerhalb einer vorgegebenen Zeitspanne einen vorgegebenen Grenzwert nicht überschreitet.

15. Verfahren nach den Ansprüchen 13 und 14, **dadurch gekennzeichnet, dass** die Radioaktivität des Staubes im Filter (90) nach dem Cobalt-Coincidence-Verfahren gemessen wird.

## Claims

1. Plant for processing activated, contaminated and/or non-contaminated residual material, in which, in a modular design, with low radiation exposure and low transport effort, activated, contaminated and/or non-contaminated residual material or waste, decoupled from the dismantling and independently of a specific nuclear plant, is supplied for recycling, landfill or waste storage following separation and/or decontamination, consisting of
- a plant area in a building (27) with an entrance and exit (27.2, 27.3) for personnel,
- at least one inlet for material, which is formed as an air lock (1, 1.1, 1.2) for contaminated parts,
- at least one outlet (27.4) for material (31) to be dispensed, which is decontaminated,
- at least one outlet (1, 1.1, 1.2) for material or radioactive waste that can be released in a restricted manner,
- processing stations (12, 13, 14, 15, 16, 17, 18, 19, 20, 21, 22), which are separated from one another by flexible, adjustable walls (28) so that their area can be increased, reduced or rearranged with little effort according to the required throughput,
- processing stations (2, 3, 4, 5), which are separated from one another by fixed walls (25) and
- transport containers, transport means and storage spaces and areas, wherein processing stations, at which a high dose rate occurs, are arranged in an area for high dose rate far away from the personnel entrance and exit (27.2, 27.3) and from the outlet (27.4) for decontaminated material (31) to be dispensed.

2. Plant according to claim 1, **characterised in that** the building (27) is provided with a slightly decontaminated coating (27.1).

3. Plant according to claim 1 or 2, **characterised in that** the processing stations comprises large component breakdown (15), thermal breakdown (12), manual breakdown (13), thin sheet processing (14), cable processing (17), asbestos conditioning (18), sorting tent for radioactive waste (19), sorting tent for nonradioactive waste (20), concrete breaker (21), concrete surface processing (22), box washing system (11), wet decontamination (8, 10), ultrasonic bath (9), dry blasting system, blasting wheel system (6), manual blasting box (7), high pressure press (2), Conrad container loading (4) and drying/drum measurement system (3).

4. Plant according to claim 3, **characterised in that** the concrete surface processing (22) has a concrete milling device (74, 76), which is suitable for removing contaminated surfaces (58, 60, 61) of concrete parts and suctioning them by means of a vacuum pump (72) into one of the dust collectors (81) downstream of the concrete milling device (74, 76), wherein the dust collector is configured such that the majority of dust (87) is separated downwards and the majority of an air current (83) upwards and an activity measuring device (92) is downstream of the dust collector (81), which is configured such that it measures the radiation exposure of the dust (87).

5. Plant according to claim 4, **characterised in that** a filter (90, 101) is arranged between the dust collector (87) and the vacuum pump (72) to separate fine dust particles.

6. Plant according to claim 4 and 5, **characterised in that** the activity measuring device (92) constitutes a cobalt coincidence measuring device, which is downstream of the two-way valve (98) which guides the dust (87) in a waste collection container (97) for contaminate material or a waste container (99) for released material.

7. Plant according to any one of claims 4 to 6, **characterised in that** a cobalt coincidence measuring device is arranged on the filter (90) as a detector (100).

8. Method for processing activated, contaminated and non-contaminated residual materials from the dismantling of nuclear plants, wherein the processing takes place decoupled from dismantling and independently of a specific nuclear plant with the aim of supplying the residual materials largely for recycling, wherein the residual materials are supplied to a plant according to the features of claim 1 and processed in processing stations, after which a decision measurement takes place and wherein the decontaminated residual materials are supplied for recycling and the contaminated residual materials and radioactive waste are supplied to a final depository.

9. Method according to claim 8 for processing contaminated metallic residual materials such as steel parts (30), **characterised in that**
- the contaminated steel parts (30), in a first step, go through a first air lock (1, 1.1,1.2), in which they are registered and possibly removed from the transport containers with suitable devices,
- the contaminated steel parts (30) are supplied to manual disassembling (12) and/or thin sheet processing (14) in which they are mechanically-thermally dismantled,
- the contaminated and broken-down steel parts (30) are supplied to wet decontamination (10) or decontamination by means of high pressure cleaning (8), dry blasting process, trough blasting process, sluice wheel process (6) or blasting box process (7),
- the treated parts are supplied for decision measurement, after which contaminated steel parts (30) leave the plant via the air locks (1, 1.2, 1.1) and clearance measurable material leaves the plant via the outlet for clearance measurable material (27.4).

10. Method according to claim 8, **characterised by** processing mineral residual materials such as rubble by
- pre-measuring the rubble
- classifying as conventional or radioactive waste
- screening and coarse grinding conventional waste with subsequent pre-measurement and decision measurement and packing the conventional waste for landfill or recycling and
- screening and coarse grinding radioactive waste and
- filling into a container for a warehouse and
- transporting the waste.

11. Method according to claim 8, **characterised by** processing residual materials such as cables by
- decontaminating the cables by means of wiping or another suitable process
- peeling the cables
- shredding the cables and peeled-off parts
- decision measurement of the peeled and shredded parts of the cable, after which
- packaging and recycling recyclable residual materials and
- filling contaminated residual materials into a waste container with subsequent transport and storage.

12. Method according to claim 8, **characterised by** processing residual materials such as waste by
- sorting the waste into conventional and radioactive waste, wherein the conventional combustible waste is compressed and supplied for pre-measurement and decision measurement, after which the uncontaminated waste is supplied to external conventional incineration and
- the radioactive waste is separated into combustible and non-combustible waste, wherein the combustible radioactive waste is compressed and supplied to dose rate and contamination measurement and external incineration and the radioactive non-combustible waste is supplied to high pressure compression and drying and
- the radioactive, burnt and compressed and dried waste is filled into a container or another suitable container and transported and stored.

13. Method according to claim 8 for processing mineral residual materials such as concrete parts, **characterised by**
- transporting mineral residual materials (37) through the air lock area (1, 1.1, 1.2) into the plant for concrete processing (22),
- possibly dismantling large concrete parts and removing the parts preventing the contamination measurement,
- a surface treatment and surface removal for decontamination,
- pre-measurement and decision measurement,
- assigning to conventional clearance measurable waste and residual material or radioactive waste and
- transporting the contaminated demolished concrete (40) into Conrad container loading (4) and further into a final depository,
- transporting a clearance measure concrete beam (38) via the sluice area (1, 1.1, 1.2) from the plant and
- transporting the clearance measurable demolished concrete (39) via the outlet (27.4) for clearance measurable material out of the plant.

14. Method according to claim 13, **characterised by**
- removing a contaminated surface (58, 60, 61) of a concrete part and suctioning the resulting dust (87) through an air current (83) into a collector (81),
- separating dust (87) and air current (83) in the collector (81),
- separating fine residual dust particles from the air current (83) by means of a filter (90, 101),
- determining the radioactivity of the dust particles (87) after the collection operation with an activity measuring device (92),
- transferring the dust particles (87) into a waste container (97) for contaminated material if the measured radioactivity exceeds a predefined limit value within a predefined period,
- transferring the dust particles (89) into a waste container (99) for clearance measurable material if the measured radioactivity does not exceed a predefined limit value within a predefined period.

15. Method according to claims 13 and 14, **characterised in that** the radioactivity of the dust in the filter (90) is measured according to the cobalt coincidence method.

## Revendications

1. Installation pour le traitement de matières rési-duelles activées, contaminées et / ou non contaminées, dans laquelle des matières résiduelles ou des déchets activés, contaminés et / ou non contaminés sont, de manière modulaire, avec une faible irradiation et à avec une faible mise en œuvre de transport, découplés du démantèlement et indépendamment d'une installation nucléaire, concrète, et conduits, après une séparation et / ou une décontamination, à une installation de réutilisation, une décharge ou un dépôt de déchets, laquelle installation consiste en
- une surface située dans un bâtiment (27) qui est doté d'une entrée, d'une sortie (27.2, 27.3) pour le personnel,
- au moins un accès pour le matériau, lequel est réalisé sous la forme d'un sas (1,1.1,1.2) pour les pièces contaminées,
- au moins une sortie (27.4) pour le matériau à délivrer (31), lequel est décontaminé,
- au moins une sortie (1.11, 1.2) pour matériau ou déchets radioactifs pouvant être délivré dans une certaine limite,
- des stations de traitement (12, 13, 14, 15, 16, 17, 18, 19, 20, 21, 22), qui sont séparées les unes des autres par des parois (28) flexibles, réglables, de manière à ce que leur surface puisse être agrandie, réduite ou modifiée avec peu de mise en œuvre en fonction du rendement exigé,
- des stations de traitement (2, 3, 4, 5), qui sont séparées les unes des autres par des parois (25) fixes, ainsi que
- des conteneurs de transport, des moyens de transport et des halles et zones de stockage,
sachant que les stations de traitement, dans lesquelles un haut débit de dose a lieu, sont disposées dans un domaine pour hauts débits de dose, qui est très éloigné de l'entrée et de la sortie du personnel (27.2, 27.3) et de la sortie (27.4) du matériau décontaminé à délivrer (31).

2. Installation selon la revendication 1, **caractérisée en ce que** le bâtiment (27) est pourvu d'un revêtement (27.1) qui peut être facilement décontaminé.

3. Installation selon revendication 1 ou 2, **caractérisée en ce que** les stations de traitement comprennent une fragmentation de gros composants (15), une fragmentation thermique (12), une fragmentation manuelle (13), un traitement de tôles minces (14), un traitement de câbles (17), un conditionnement d'amiante (18), une tente de tri pour les déchets radioactifs (19), une tente de tri pour les déchets non radioactifs (20), un concasseur de béton (21), un traitement de surfaces de béton (22), un lavage en compartiment (11), une décontamination humide (8,10), un bain ultrason (9), une installation de décapage à sec, une installation de turbine de grenaillage (6), un compartiment de grenaillage à la main (7), une presse haute pression (2), un chargement en containers Konrad (4) et une installation de séchage et de mesure (3).

4. Installation selon la revendication 3, **caractérisée en ce que** l'installation de traitement de béton (22) est dotée d'un dispositif de fraisage de béton (74, 76), qui est apte à enlever des surfaces contaminées (58, 60, 61) de morceaux de béton et d'un séparateur de poussière (81), connecté en aval du dispositif de fraisage de béton (74, 76), dans lequel elles sont aspirées au moyen d'une pompe à vide (72), sachant que le séparateur de poussière est configuré de manière à ce que la majeure partie de la poussière (87) soit séparée vers le bas et la majeure partie du flux d'air (83) soit séparé vers le haut et, qu' un appareil de mesure d'activité (92), qui mesure l'irradiation de la poussière (87), est connecté en aval du séparateur de poussière (81), lequel est configuré de manière à ce qu'il mesure l'irradiation de la poussière (87).

5. Installation selon la revendication 4, **caractérisée en ce que**, entre le séparateur de poussière (87) et la pompe à vide (72), est disposé un filtre (90, 101) destiné à la séparation des fines particules de poussière.

6. Installation selon les revendications 4 et 5, **caractérisée en ce que** l'appareil de mesure d'activité (92) est un appareil de mesure de coïncidence de cobalt, en aval duquel est connecté un clapet à deux voies (98), qui conduit la poussière (87) dans un collecteur de déchets (97) pour matériau contaminé ou dans un conteneur de déchets (99) pour le matériau autorisé.

7. Installation selon l'une des revendications 4 à 6, **caractérisée en ce que**, sur le filtre (90), est disposé un appareil de mesure de coïncidence de cobalt en tant que détecteur (100).

8. Procédé pour le traitement de matières résiduelles activées, contaminées et non contaminées en provenance du démantèlement d'installations nucléaires, sachant que le traitement est découplé du démantèlement et a lieu indépendamment d'une installation nucléaire, concrète, aux fins de réutilisation de la plus grande partie des matières résiduelles, sachant que les matières résiduelles sont conduites à une installation qui présente les caractéristiques de la revendication 1 et sont traitées dans des stations de traitement, ce après quoi a lieu une mesure de décision, et sachant que les matières résiduelles décontaminées sont conduites à la réutilisation et les déchets radioactifs à un dépôt final.

9. Procédé selon la revendication 8, destiné au traitement de matières résiduelles métalliques, contaminées, telles que des pièces en acier (30), **caractérisé en ce que**
- les pièces en acier (30) contaminées passent, au cours d'une première étape, à travers un sas (1, 1.1, 1.2), dans lequel elles sont enregistrées et, le cas échéant, retirées des conteneurs de transport avec des appareils appropriés,
- les pièces en acier (30) contaminées sont conduites à une station de fragmentation manuelle (12) ou / et de traitement de tôles mince (14), dans lesquelles elles sont fragmentées mécano-thermiquement,
- les pièces en acier (30) contaminées et fragmentées sont conduites à une station de décontamination humide (10) ou de décontamination par lavage haute pression (8), de décapage à sec, à une grenailleuse à bande en auge, une turbine de grenaillage (6) ou à un compartiment de grenaillage (7),
- les pièces traitées sont conduites à la mesure de décision, ce après quoi les pièces en acier (30) contaminées quittent l'installation par le sas (1.11, 1.2), le matériau pouvant satisfaire à une mesure libératoire (27.4) quitte l'installation par la sortie pour matériau pouvant satisfaire à une mesure libératoire.

10. Procédé selon la revendication 8, **caractérisé par** un traitement de matières résiduelles, minérales, telles que décombres par
- une mesure préalable des décombres
- une séparation en déchets conventionnels ou déchets radioactifs
- un tamisage et une fragmentation grossière des déchets conventionnels, qui est suivie d'une mesure préalable et mesure de décision et de l'emballage des déchets conventionnels destinés à une décharge ou une réutilisation, et
- un tamisage et une fragmentation grossière des déchets radioactifs et
- leur chargement dans un conteneur pour un dépôt, et
- un transport des déchets à leur destination.

11. Procédé selon la revendication 8, **caractérisé par** un traitement de matières résiduelles, telles que des câbles, par
- une décontamination des câbles par essuyage ou d'une autre manière appropriée
- un pelage des câbles
- un découpage des câbles et des morceaux pelés
- une mesure de la décision des morceaux de câbles pelés et découpés, ce après quoi ont lieu
- un emballage et un recyclage de matières résiduelles réutilisables et
- un remplissage d'un conteneur de déchets avec des matières résiduelles contaminées, suivi d'un transport et d'une mise en dépôt.

12. Procédé selon la revendication 8, **caractérisé par** un traitement de matières résiduelles, telles que déchets, par
- une séparation des déchets en déchets conventionnels et en déchets radioactifs, sachant que les déchets radioactifs combustibles sont pressés et soumis à une mesure préalable et une mesure de décisive, ce après quoi les déchets non contaminés sont brûlés par combustion conventionnelle externe, et
- les déchets radioactifs sont séparés en déchets combustibles et non combustibles, sachant que les déchets radioactifs, combustibles sont pressés et soumis à une mesure de débit de dose et de contamination et brûlés par combustion externe et les déchets radioactifs, non combustibles sont conduits à une presse haute pression et soumis à un séchage, et
- les déchets radioactifs, brûlés et pressés et séchés sont mis dans un conteneur ou dans tout autre récipient approprié et transportés et stockés.

13. Procédé selon la revendication 8 pour le traitement de matières résiduelles minérales, **caractérisé par**
- le transport de matières résiduelles, minérales (37), à travers le sas (1, 1.1, 1.2), dans l'installation de traitement de béton (22),
- le cas échéant, la fragmentation des gros morceaux de béton et enlèvement des morceaux qui gêneraient la mesure de la contamination,
- un traitement de surface ainsi qu'un enlèvement de surfaces pour la décontamination,
- une mesure préalable et mesure de la décision,
- une affectation en tant que déchets et matières résiduelles conventionnels, pouvant satisfaire à une mesure libératoire ou en tant que déchets radioactifs et
- transport des débris de béton contaminés (40) au lieu de chargement dans des conteneurs Konrad (4) et de là au dépôt final,
- transport d'une barre de béton pouvant satisfaire à une mesure libératoire (38) hors de l'installation, par l'intermédiaire du sas (1, 1.1, 1.2),
- transport des débris de béton (38) hors de l'installation par la sortie (27.4) pour matériau pouvant satisfaire à une mesure libératoire.

14. Procédé selon la revendication 13, **caractérisé par**
- enlèvement d'une surface contaminée (58, 60, 61) d'un morceau de béton et aspiration, par flux d'air (83), dans un séparateur (81), de la poussière produite (87),
- séparation de la poussière (87) et d'un flux d'air (83) dans le séparateur (81),
- séparation de fins particules de poussière résiduelle et du flux d'air (83) au moyen d'un filtre (90, 101),
- détermination de la radioactivité des particules de poussière (87) au moyen d'un appareil de mesure de l'activité (92), après le processus de séparation,
- transfert des particules de poussière (87) dans un collecteur de déchets (97) pour matériau contaminé, quand la radioactivité mesurée dépasse au cours d'un laps de temps prédéterminé une valeur limite prédéterminée,
- transfert des particules de poussière (89) dans un collecteur de déchets (99) pour matériau pouvant satisfaire à une mesure libératoire, quand la radioactivité mesurée ne dépasse pas au cours d'un laps de temps prédéterminé une valeur limite prédéterminée.

15. Procédé selon les revendications 13 et 14, **caractérisé en ce que** la radioactivité de la poussière est mesurée dans le filtre (90) selon le procédé de coïncidence de cobalt.
